(19) Europäisches Patentamt
European Patent Office
Office européen des brevets

(11) **EP 4 093 993 B1**

(12) **EUROPÄISCHE PATENTSCHRIFT**

(45) Veröffentlichungstag und Bekanntmachung des Hinweises auf die Patenterteilung:
**03.06.2026 Patentblatt 2026/23**

(21) Anmeldenummer: **21700680.8**

(22) Anmeldetag: **11.01.2021**

(51) Internationale Patentklassifikation (IPC):
***F16H 61/04*** *(2006.01)*

(52) Gemeinsame Patentklassifikation (CPC):
**F16H 3/089; B60K 1/00; B60K 1/02; F16H 61/04; F16H 61/688;** B60K 2001/001; B60Y 2200/14; B60Y 2200/91; F16H 2003/0811; F16H 2061/0425; F16H 2061/0433; F16H 2200/0021; F16H 2200/0034; F16H 2200/2094

(86) Internationale Anmeldenummer:
**PCT/EP2021/050335**

(87) Internationale Veröffentlichungsnummer:
**WO 2021/148260 (29.07.2021 Gazette 2021/30)**

(54) **SCHALTSTRATEGIE FÜR EIN GETRIEBE**

GEAR-SHIFTING STRATEGY FOR A GEARBOX

STRATÉGIE DE CHANGEMENT DE VITESSE POUR BOÎTE DE VITESSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2020 DE 102020101668**

(43) Veröffentlichungstag der Anmeldung:
**30.11.2022 Patentblatt 2022/48**

(60) Teilanmeldung:
**26160114.0 / 4 722 566**

(73) Patentinhaber:
• **MAN Truck & Bus SE**
  **80995 München (DE)**
• **Mahle International GmbH**
  **70376 Stuttgart (DE)**

(72) Erfinder:
• **MÜLLER, Tobias**
  **80995 München (DE)**
• **ZIEGLMAIER, Wolfgang**
  **80995 München (DE)**
• **GEISSLER, Josef**
  **80995 München (DE)**
• **WIRTH, Christian**
  **85452 Moosinning (DE)**

(74) Vertreter: **v. Bezold & Partner Patentanwälte - PartG mbB**
  **Ridlerstraße 57**
  **80339 München (DE)**

(56) Entgegenhaltungen:
EP-A1- 3 388 274        WO-A1-2018/145231
CN-A- 106 382 349      DE-A1- 10 316 862

**Beschreibung**

Die vorliegende Erfindung betrifft einen Antriebsstrang für ein Kraftfahrzeug und ein Kraftfahrzeug mit einem entsprechenden Antriebsstrang .

Elektrofahrzeuge mit ausschließlich elektrischem Fahrantrieb und zugehöriger Getriebekonstruktion sind im Stand der Technik in den unterschiedlichsten Ausführungsformen bekannt.

Ein Kraftfahrzeug kann von mehreren elektrischen Antriebseinheiten angetrieben werden. Beispielsweise offenbart die DE 199 32 118 C1 eine Mehrfach-Motoren-Antrieb, bei dem zwei Elektromotoren vorgesehen sind, die einem gemeinsamen Abtrieb mit zweistufigem Getriebe zugeordnet sind. Eine automatische Steuerung steuert einerseits die Lastverteilung zwischen den Motoren und andererseits das Getriebe, um einen optimalen Wirkungsgrad des Abtriebes zu gewährleisten.

Ein mit einem Elektromotor angetriebenes Kraftfahrzeug kann ein Zweiganggetriebe aufweisen. Beispielsweise offenbart die DE 10 2013 204 227 A1 einen Antriebsstrang für ein Fahrzeug mit einem elektrischen Antrieb, der über eine Antriebswelle mit zumindest einer ersten Übersetzungsstufe und einer zweiten Übersetzungsstufe koppelbar ist. Zumindest eine Schalteinrichtung zum Schalten der Übersetzungsstufen ist vorgesehen, wobei die Schalteinrichtung zum Ausführen von Lastschaltungen zumindest ein formschlüssiges Schaltelement und zumindest ein reibschlüssiges Schaltelement umfasst. Jede der Übersetzungsstufen ist mit dem formschlüssigen Schaltelement schaltbar. Zumindest eine der Übersetzungsstufen ist sowohl mit dem formschlüssigen Schaltelement als auch mit dem reibschlüssigen Schaltelement schaltbar.

Zum Aufbauen eines Getriebes für ein Kraftfahrzeug können Modulsysteme verwendet werden. Beispielsweise offenbart die DE 10 2016 002 592 A eine 1- oder 2-Gang-Getrietriebevorrichtung für ein Elektrofahrzeug mit modularem Aufbau. Die Getriebevorrichtung weist eine Getriebekonstruktion und einen elektrischen Fahrantrieb zum Antreiben des Fahrzeugs auf. Die Getriebekonstruktion ist als Getriebemodul ausgebildet und antriebsseitig direkt mit dem Fahrantrieb verbunden.

Aus der WO 2018/145231 A1 ist ein zweiachsiges, horizontales, rein elektrisches Antriebssystem zur Verwendung in Fahrzeugen bekannt. Das Antriebssystem umfasst einen ersten Antriebsmotor, einen zweiten Antriebsmotor und ein Getriebe. Ein innerer Teil des Getriebes weist dabei ein erstes Hochgeschwindigkeits-Übertragungsgetriebe und ein zweites Niedergeschwindigkeits-Übertragungsgetriebe auf, die mit dem ersten Antriebsmotor verbunden sind. Ferner weist der innere Teil des Getriebes ein drittes Hochgeschwindigkeits-Getriebe und ein viertes Niedergeschwindigkeits-Übertragungsgetriebe auf, die mit dem zweiten Antriebsmotor verbunden sind. Die Leistung der beiden Antriebsmotoren wird entweder einzeln oder in Kombination durch verschiedene Kombinationen jedes der genannten Getriebezüge abgegeben. Das zweiachsige, horizontale, rein elektrische Antriebssystem zur Verwendung in Fahrzeugen hat eine einfache Struktur und kann leicht angeordnet werden, während die Beschleunigung und die Steigfähigkeit hoch sind, das Schalten der Gänge reibungslos erfolgt und eine ununterbrochene Leistung garantiert werden kann, sodass die zum Fahren benötigte Leistung während des Schaltens der Gänge kontinuierlich erzeugt wird. Gleichzeitig kann die kinetische Energie, die während des Fahrens eines Fahrzeugs erzeugt wird, teilweise in elektrische Energie umgewandelt werden, wenn gebremst wird, wodurch ein Teil des elektrischen Energieverlusts eingespart wird, wodurch die Batteriekosten reduziert und die Reichweite von Elektrofahrzeugen erhöht wird.

Die EP 3 388 274 A1 offenbart ein zweiachsiges paralleles elektrisches Antriebssystem für ein Fahrzeug und Verfahren zur Steuerung des Gangwechsels. Das Antriebssystem umfasst einen Antriebsmotor I, einen Antriebsmotor II und ein automatisiertes mechanisches Getriebe. Das automatisierte mechanische Getriebe umfasst ein Zahnradpaar eines ersten Gangs, ein Zahnradpaar eines zweiten Gangs, ein Zahnradpaar eines dritten Gangs, ein Zahnradpaar eines vierten Gangs, eine Einrückmuffe I, eine Einrückmuffe II, eine Getriebeeingangswelle I, eine Getriebeeingangswelle II und eine Getriebeausgangswelle III. Das Antriebssystem ist einfach aufgebaut und zweckmäßig angeordnet, hat eine hohe Beschleunigung und Steigfähigkeit und realisiert einen sanften Gangwechsel ohne Leistungsunterbrechung. Durch den Einsatz des Schaltsteuerungsverfahrens kann die kontinuierliche Erzeugung der für den Antrieb erforderlichen Energie bei einem Schaltvorgang sichergestellt werden. Darüber hinaus kann die kinetische Energie, die während der Fahrt eines Fahrzeugs sichergestellt wird, während eines Bremsvorgangs in elektrische Energie umgewandelt werden, wodurch die Verluste an elektrischer Energie verringert werden, so dass die Batteriekosten reduziert und die Reichweite des Fahrzeugs verbessert werden.

Die DE 103 16 862 A1 offenbart ein Antriebssystem für Fahrzeuge, insbesondere für Nutzfahrzeuge wie landwirtschaftliche oder industrielle Schlepper, mit wenigstens einem ersten Rad, das durch einen zugehörigen Achs- oder Einzelradantriebsmotor angetrieben wird, und mit wenigstens einem zweiten Rad, in dessen Antriebsstrang ein zwischen wenigstens zwei Drehzahlübertragungsstufen umschaltbares Getriebe angeordnet ist. Um zu vermeiden, dass während des Schaltens des Umschaltgetriebes die Fahrzeuggeschwindigkeit absinkt und störende Schaltrucke auftreten, ist eine Einrichtung zur Erfassung eines Umschaltbefehls und eine Steuereinrichtung vorgesehen, welche bei Vorliegen eines Umschaltbefehls automatisch wenigstens den das erste Rad antreibenden Antriebsmotor höher belastet, die Umschaltung des Umschaltgetriebes des zweiten Rades steuert und die Belastung des das erste Rad antreibenden Antriebsmotors wieder herabsetzt.

Der Erfindung liegt die Aufgabe zu Grunde, einen Antriebsstrang mit einer alternativen und/ oder verbesserten Getriebetechnik für ein Kraftfahrzeug bzw. Elektrofahrzeug zu schaffen.

Die Aufgabe wird gelöst durch einen Antriebsstrang mit den Merkmalen des Anspruchs 1 und ein Kraftfahrzeug mit den Merkmalen des Anspruchs 13. Vorteilhafte Weiterbildungen sind in den abhängigen Ansprüchen und der Beschreibung angegeben.

Die vorliegende Offenbarung betrifft ein Getriebe, vorzugsweise ein Zweiganggetriebe, für ein Kraftfahrzeug, vorzugsweise ein Nutzfahrzeug. Das Getriebe weist ein erstes Teilgetriebe, das zum trieblichen Verbinden mit einer ersten Antriebseinheit ausgebildet ist, auf. Das erste Teilgetriebe weist zwei Übersetzungsstufen und eine (z. B. formschlüssige) Schalteinheit zum Schalten zwischen den zwei Übersetzungsstufen auf. Das Getriebe weist ein zweites Teilgetriebe, das zum trieblichen Verbinden mit einer zweiten Antriebseinheit ausgebildet ist, auf. Das zweite Teilgetriebe weist zwei Übersetzungsstufen und eine (z. B. formschlüssige) Schalteinheit zum Schalten zwischen den zwei Übersetzungsstufen auf. Das Getriebe weist ein Ausgangselement (z. B. eine Ausgangswelle) auf, das trieblich mit einem Abtrieb des ersten Teilgetriebes und einem Abtrieb des zweiten Teilgetriebes verbunden ist. Das Getriebe weist eine Steuereinheit auf, die zum Steuern eines Gangwechsels des Getriebes (z. B. vom ersten Gang des Getriebes zum zweiten Gang des Getriebes oder umgekehrt) ausgebildet ist, wobei für den Gangwechsel die Schalteinheit des ersten Teilgetriebes und die Schalteinheit des zweiten Teilgetriebes zeitversetzt, vorzugsweise sequentiell, geschaltet werden.

Durch den zeitversetzten Schaltablauf für einen einzigen Gangwechsel kann das Getriebe eine Schaltung ohne Zugkraftunterbrechung ermöglichen. Bei einer Schaltung einer Schalteinheit eines Teilgetriebes kann über dieses Teilgetriebe keine Antriebsleistung mehr übertragen werden. In dieser Zeit kann das andere Teilgetriebe jedoch weiterhin Antriebsleistung übertragen, da die Schalteinheiten nicht gleichzeitig schalten. Je nach Steuerung der mit den Teilgetrieben verbundenen Antriebseinheiten kann eine Zugkraftreduzierung während des Schalten teilweise oder vollständig kompensiert werden, wenn die mit dem jeweils nicht schaltenden Teilgetriebe verbundene Antriebseinheit während des Schaltens der Schalteinheit des anderen Teilgetriebes mit einer erhöhten Leistungsausgabe betrieben wird.

Vorzugsweise kann sich der Begriff "Steuereinheit" auf eine Elektronik (z. B. mit Mikroprozessor(en) und Datenspeicher) und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Zweckmäßig kann die Steuereinheit dazu ausgebildet sein, die erste Schalteinheit und die zweite Schalteinheit zu steuern und/oder zu betätigen.

In einem Ausführungsbeispiel ist die Steuereinheit dazu ausgebildet, dass zunächst die Schalteinheit des ersten Teilgetriebes schaltet und dann die Schalteinheit des zweiten Teilgetriebes schaltet, vorzugsweise nach Abschluss des Schaltens der Schalteinheit des ersten Teilgetriebes und/oder Verstreichen einer Zeitdauer bis die Schalteinheit des zweiten Teilgetriebes annähernd lastfrei ist. Damit kann sichergestellt werden, dass der Gangwechsel ohne Zugkraftunterbrechung stattfinden kann.

In einem weiteren Ausführungsbeispiel ist die Steuereinheit dazu ausgebildet, dass das erste Teilgetriebe und das zweite Teilgetriebe während des Gangwechsels nacheinander eine Antriebsleistung durch das Getriebe übertragen, wobei vorzugsweise jeweils die Schalteinheit eines der Teilgetriebe schaltet und das jeweils andere der Teilgetriebe die Antriebsleistung überträgt.

In einem weiteren Ausführungsbeispiel weisen die zwei Übersetzungsstufe des ersten Teilgetriebes die gleichen Übersetzungen auf wie die zwei Übersetzungsstufen des zweiten Teilgetriebes. Es ist möglich, dass die zwei Übersetzungsstufen des ersten Teilgetriebes und die zwei Übersetzungsstufen des zweiten Teilgetriebes als Gleichteilkomponenten ausgebildet sind.

In einer Ausführungsform weisen das erste Teilgetriebe und das zweite Teilgetriebe gleich viele Gänge auf. Beispielsweise kann das erste Teilgetriebe und/oder das zweite Teilgetriebe jeweils als Zweiganggetriebe ausgeführt sein. Es ist möglich, dass das erste Teilgetriebe und das zweite Teilgetriebe im Wesentlichen gleich aufgebaut sind. Beispielsweise können beide Teilgetriebe ein Grundmodul wie hierin offenbart aufweisen.

In einer weiteren Ausführungsform sind die Schalteinheit des ersten Teilgetriebes und die Schalteinheit des zweiten Teilgetriebes unabhängig voneinander schaltbar. Damit kann die zeitverzögerte Schaltung auf einfach Weise ermöglicht werden.

In einer weiteren Ausführungsform ist das Getriebe als ein Summiergetriebe aus dem ersten Teilgetriebe und dem zweiten Teilgetriebe gebildet. Es ist möglich, dass das erste Teilgetriebe und das zweite Teilgetriebe parallel geschaltet sind.

In einer Ausführungsvariante ist das Getriebe lastschaltbar, und/oder das erste Teilgetriebe und das zweite Teilgetriebe sind jeweils nicht-lastschaltbar. Die Lastschaltbarkeit des Getriebes kann fahrsituationsabhängig sein. Eine Lastschaltbarkeit kann z. B. möglich sein, wenn die Nennleistung (oder eine temporär erlaubte Überschreitung der Nennleistung) einer der beiden Antriebseinheiten größer als die erforderliche Leistung ist.

In einer weiteren Ausführungsvariante ist die Schalteinheit des ersten Teilgetriebes und/oder die Schalteinheit des zweiten Teilgetriebes zum nur im Wesentlichen lastfreien Schalten ausgeführt. Beispielsweise kann die Schalteinheit des ersten Teilgetriebes und/oder die Schalteinheit des zweiten Teilgetriebes als eine formschlüssige Schalteinheit ausgebildet sein, vorzugsweise als Klauenkupplung.

In einer weiteren Ausführungsvariante sind die zwei Übersetzungsstufen des ersten Teilgetriebes und/oder die zwei Übersetzungsstufen des zweiten Teilgetriebes als Radstufen, vorzugsweise Stirnradstufen, ausgebildet.

In einem Ausführungsbeispiel weisen das erste Teilgetriebe und das zweite Teilgetriebe jeweils eine Eingangswelle, eine Zwischenwelle und die zwei Übersetzungsstufen, über die die Eingangswelle jeweils trieblich mit der Zwischenwelle verbindbar ist, auf. Über die Schalteinheit ist wahlweise die eine oder die andere der zwei Übersetzungsstufen trieblich mit der Eingangswelle oder der Zwischenwelle verbindbar. Das erste Teilgetriebe und das zweite Teilgetriebe können vorzugsweise ferner jeweils eine dritte Übersetzungsstufe, über die die Zwischenwelle trieblich mit dem Ausgangselement verbunden ist, aufweisen.

Die Erfindung betrifft einen Antriebsstrang für ein Kraftfahrzeug, vorzugsweise ein Nutzfahrzeug, aufweisend eine erste, vorzugsweise elektrische, Antriebseinheit und eine zweite, vorzugsweise elektrische, Antriebseinheit. Der Antriebsstrang weist ferner ein Getriebe wie hierin offenbart auf, wobei die erste Antriebseinheit trieblich (z. B. nur) mit dem ersten Teilgetriebe verbunden ist (z. B. direkt) und die zweite Antriebseinheit trieblich (z. B. nur) mit dem zweiten Teilgetriebe verbunden ist (z. B. direkt).

In einer erfindungsgemäßen Variante ist die Steuereinheit dazu ausgebildet, dass während des Schaltens der Schalteinheit eines der Teilgetriebe eine Antriebsleistungsverringerung der Antriebseinheit, die mit dem Teilgetriebe, dessen Schalteinheit gerade schaltet, verbunden ist, durch eine Antriebsleistungserhöhung derjenigen Antriebseinheit, die trieblich mit dem Teilgetriebe, dessen Schalteinheit gerade nicht schaltet, verbunden ist, zumindest teilweise kompensiert wird, vorzugsweise für beide Antriebseinheiten nacheinander.

In einer weiteren erfindungsgemäßen Variante ist die Steuereinheit dazu ausgebildet, dass vor dem Schalten der Schalteinheiten der Teilgetriebe eine Antriebsleistungsverringerung derjenigen Antriebseinheit, die mit dem Teilgetriebe, dessen Schalteinheit zuerst schaltet, vorgenommen wird und/oder eine, vorzugsweise synchrone und/oder gleichzeitige, Antriebsleistungserhöhung derjenigen Antriebseinheit, die mit dem Teilgetriebe, dessen Schalteinheit zeitverzögert schaltet, vorgenommen wird.

In einer weiteren erfindungsgemäßen Variante ist die Steuereinheit dazu ausgebildet, dass zwischen dem Schalten der Schalteinheiten der Teilgetriebe eine Antriebsleistungsverringerung derjenigen Antriebseinheit, die mit dem Teilgetriebe, dessen Schalteinheit zeitverzögert schaltet, vorgenommen wird und/oder eine, vorzugsweise synchrone und/oder gleichzeitige, Antriebsleistungserhöhung derjenigen Antriebseinheit, die mit dem Teilgetriebe, dessen Schalteinheit gerade geschaltet hat, vorgenommen wird.

In einer weiteren erfindungsgemäßen Variante ist die Steuereinheit dazu ausgebildet, dass nach dem Schalten der Schalteinheiten der Teilgetriebe eine Antriebsleistungsverringerung derjenigen Antriebseinheit, die mit dem Teilgetriebe, dessen Schalteinheit zuerst geschaltet hat, vorgenommen wird und/oder eine, vorzugsweise synchrone und/oder gleichzeitige, Antriebsleistungserhöhung derjenigen Antriebseinheit, die mit dem Teilgetriebe, dessen Schalteinheit zeitverzögert geschaltet hat, vorgenommen wird.

In einer Ausführungsform wird eine Antriebsleistungserhöhung während des Gangwechsels temporär maximal auf über eine Nennleistung der jeweiligen Antriebseinheit gesteigert oder ist dahin steigerbar (z. B. bis auf eine jeweils verfügbare Spitzenleistung oberhalb der maximalen Dauerleistung). Alternativ kann beispielsweise eine Antriebsleistungserhöhung während des Gangwechsels temporär maximal nur bis zu einer Nennleistung der jeweiligen Antriebseinheit gesteigert werden oder steigerbar sein.

Die Erfindung betrifft auch ein Kraftfahrzeug, vorzugsweise ein Nutzfahrzeug (z. B. Lastkraftwagen oder Omnibus), aufweisend den Antriebsstrang wie hierin offenbart.

Vorzugsweise kann der hierin verwendete Ausdruck "trieblich verbunden" bedeuten, dass die beiden "trieblich verbunden" Komponenten direkt oder indirekt trieblich miteinander verbunden sind.

Die zuvor beschriebenen einzelnen Merkmale, bevorzugten Weiterbildung und Varianten der obigen Aspekte sind beliebig miteinander kombinierbar, auch zwischen den einzelnen Aspekten, wobei die vorliegende Erfindung durch die nachfolgenden Ansprüche definiert wird.

Weitere Einzelheiten und Vorteile der Erfindung werden im Folgenden unter Bezug auf die beigefügten Zeichnungen beschrieben. Es zeigen:

Figur 1  eine schematische Ansicht eines beispielhaften Antriebsstrangs eines Kraftfahrzeugs, der nicht unter den Schutzumfang des Anspruchs 1 fällt;

Figur 2  eine schematische Ansicht eines beispielhaften Getriebes, das mit einer Antriebseinheit verbunden ist;

Figur 3  eine schematische Ansicht eines beispielhaften Grundmoduls eines modularen Getriebebaukastens;

Figur 4  eine schematische Ansicht eines weiteren beispielhaften Getriebes, das mit zwei Antriebseinheiten verbunden ist, wobei diese Anordnung Bestandteil des erfindungsgemäßen Antriebsstrangs ist;

Figur 5  eine schematische Ansicht eines weiteren anderen beispielhaften Getriebes, das mit einer Antriebseinheit verbunden ist;

Figur 6     eine schematische Darstellung eines beispielhaften Modulbaukastens;

Figur 7     ein Diagramm, das beispielhafte Volllastkennlinien für elektrische Antriebseinheiten zeigt;

Figur 8     ein beispielhaftes Schaltdiagramm für ein beispielhaftes Getriebe und unter Teillast betriebenen elektrischen Antriebseinheiten;

Figur 9     ein weiteres beispielhaftes Schaltdiagramm für ein beispielhaftes Getriebe und unter Volllast betriebenen elektrischen Antriebseinheiten;

Figur 10     eine schematische Ansicht eines weiteren beispielhaften Antriebsstrangs eines Kraftfahrzeugs, der unter den Wortlaut des Anspruchs 1 fällt;

Figur 11     eine schematische Darstellung von Ausgangswellen des beispielhaften Antriebsstrangs von Figur 9 in einer Vertikalebene;

Figur 12     eine schematische Ansicht eines weiteren anderen beispielhaften Getriebes, das mit zwei Antriebseinheiten verbunden ist, wobei diese Anordnung Bestandteil des erfindungsgemäßen Antriebsstrangs ist, in einer ersten Schaltstellung;

Figur 13     eine schematische Ansicht des weiteren anderen beispielhaften Getriebes von Figur 12 in einer zweiten Schaltstellung;

Figur 14     eine schematische Ansicht des weiteren anderen beispielhaften Getriebes von Figur 12 in einer dritten Schaltstellung;

Figur 15     eine schematische Ansicht des weiteren anderen beispielhaften Getriebes von Figur 12 in einer vierten Schaltstellung; und

Figur 16     eine schematische Ansicht eines weiteren anderen beispielhaften Getriebes, das mit zwei Antriebseinheiten verbunden ist.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

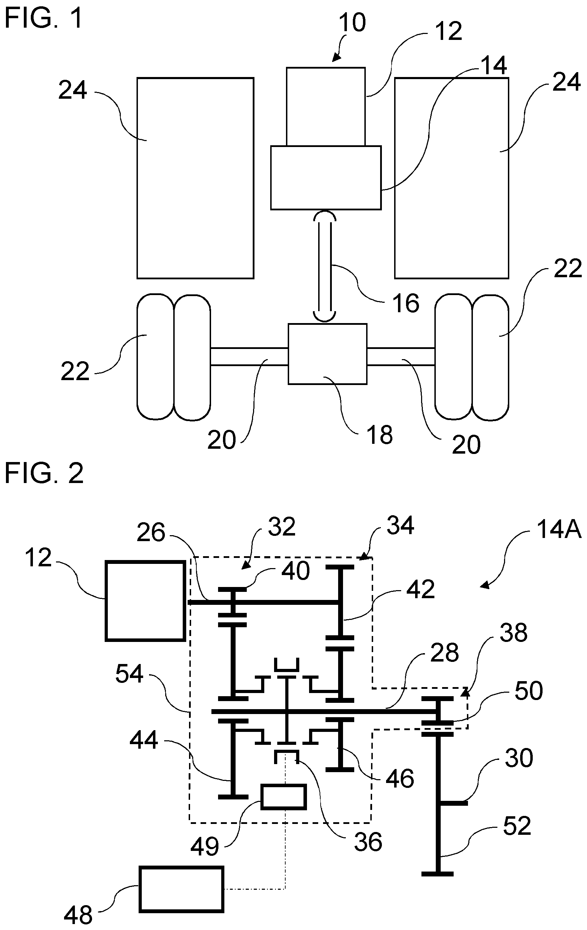

Figur 1 zeigt rein schematisch einen Antriebsstrang 10 eines Kraftfahrzeugs, der nicht unter den Schutzumfang des Anspruchs 1 fällt. Zweckmäßig kann das Kraftfahrzeug als ein Nutzfahrzeug, insbesondere als ein Lastkraftwagen oder ein Omnibus, ausgeführt sein.

Der Antriebsstrang 10 weist eine Antriebseinheit 12, ein Getriebe 14, eine Gelenkwelle 16, ein Achsgetriebe 18, Radwellen 20 und Räder 22 auf.

Die Antriebseinheit 12 ist besonders bevorzugt als eine elektrische Antriebseinheit ausgeführt. Die Antriebseinheit 12 ist zweckmäßig als eine hochdrehende elektrische Antriebseinheit ausgeführt. Beispielsweise kann die elektrische Antriebseinheit 12 eine Grenzdrehzahl in einem Bereich zwischen 10000 U/min und 24000 U/min (oder mehr oder weniger) aufweisen. Die untere Grenze kann bspw. bei 2500 U/min liegen. Die Antriebseinheit 12 ist als ein Längsmotor angeordnet, das heißt längs der Fahrzeuglängsachse ausgerichtet bzw. mit einer Ausgangswelle im Wesentlichen parallel zur Fahrzeuglängsachse. Es ist möglich, dass mehr als eine Antriebseinheit 12 vorgesehen ist.

Das Getriebe 14 ist trieblich mit einer Ausgabewelle der Antriebseinheit 12 verbunden, vorzugsweise direkt. Ein Gehäuse des Getriebes 14 kann beispielsweise direkt an ein Gehäuse der Antriebseinheit 12 angeflanscht sein. Das Getriebe 14 kann beispielsweise in einem ersten Gang eine Übersetzung (i) in einem Bereich zwischen 2,5 und 10, vorzugsweise zwischen 3 und 7, aufweisen. In einem zweiten Gang kann eine Übersetzung zwischen 6 und 18, vorzugsweise zwischen 10 und 14, sein.

Die Gelenkwelle 16 verbindet eine Ausgangswelle des Getriebes 14 trieblich mit dem Achsgetriebe 18. Die Gelenkwelle 16 ist dazu ausgebildet, nichtfluchtende Drehachsen der Ausgangswelle des Getriebes 14 und eines Eingangselements des Achsgetriebes 18 miteinander zu verbinden. Beispielsweise kann die Gelenkwelle als eine Kardanwelle mit zwei Kreuzgelenken ausgeführt sein.

Das Achsgetriebe 18 verbindet die Gelenkwelle 16 trieblich mit den Radwellen 20. Das Achsgetriebe 18 kann beispielsweise eine Kegelradstufe und ein Differentialgetriebe aufweisen. Es ist auch möglich, dass das Achsgetriebe einen Durchtrieb zu einer weiteren angetriebenen Achse aufweist. Die Radwellen 20 treiben die Räder 22 an.

Das Kraftfahrzeug weist einen oder mehrere Traktionsenergiespeicher 24 auf. Die Traktionsenergiespeicher 24 können elektrische Energie zum Antreiben der elektrischen Antriebseinheit(en) 12 bereitstellen. Beispielsweise können die Traktionsenergiespeicher 24 über eine Leistungselektronik (nicht dargestellt) elektrisch mit der elektrischen Antriebseinheit 12 verbunden sein. Die in Figur 1 gezeigte, bauraumgünstige Anordnung weist zwei Traktionsenergiespeicher 24 auf, die auf entgegengesetzten Längsseiten des Antriebsstrangs 10 angeordnet sind.

Die Figur 2 zeigt ein Ausführungsbeispiel für das Getriebe 14 von Figur 1, das zum Abgrenzen von anderen Ausführungsbeispielen mit dem Bezugszeichen 14A versehen ist.

Das Getriebe 14A ist als ein beispielsweise nicht-lastschaltbares Zweiganggetriebe ausgeführt. Das Getriebe 14A weist eine Eingangswelle 26, eine Zwischenwelle 28 und eine Ausgangswelle 30 auf. Das Getriebe 14A weist zudem eine erste Übersetzungsstufe 32, eine zweite Übersetzungsstufe 34, eine Schalteinheit 36 und eine dritte Übersetzungsstufe 38 auf.

Die Eingangswelle 26 ist trieblich mit der Antriebseinheit 12 verbunden. Vorzugsweise ist die Eingangswelle 26 direkt trieblich mit einer Ausgangswelle der Antriebseinheit 12 verbunden.

Die erste Übersetzungsstufe 32 und die zweite Übersetzungsstufe 34 können die Eingangswelle 26 trieblich mit der Zwischenwelle 28 verbinden. Die Übersetzungsstufen 32 und 34 weisen jeweils ein beispielhaft als Festrad ausgeführtes Antriebsrad 40, 42 und ein beispielhaft als Losrad ausgeführtes Abtriebsrad 44, 46 auf. Das Antriebsrad 40 bzw. 42 kämmt mit dem Abtriebsrad 44 bzw. 46. Die Antriebsräder 40, 42 sind nebeneinander auf der Eingangswelle 26 angeordnet. Die als Festräder ausgeführten Antriebsräder 40, 42 sind drehfest auf der Eingangswelle 26 angeordnet. Die Abtriebsräder 44, 46 sind nebeneinander auf der Zwischenwelle 28 angeordnet. Die als Losräder ausgeführten Abtriebsräder 44, 46 sind drehbar auf der Zwischenwelle 28 gelagert. Die Übersetzungsstufen 32 und 34 sind bevorzugt als Stirnradstufen mit jeweils zwei Stirn(-zahn-)rädern ausgeführt.

Die Schalteinheit 36 kann die Abtriebsräder 44, 46 drehfest und damit trieblich mit der Zwischenwelle 28 verbinden. In einer ersten Schaltstellung (erster Gang) verbindet die Schalteinheit 36 das Abtriebsrad 44 trieblich mit der Zwischenwelle 28. In einer zweiten Schaltstellung (zweiter Gang) verbindet die Schalteinheit 36 das Abtriebsrad 46 trieblich mit der Zwischenwelle 28. In einer dritten Schaltstellung (Neutralstellung), wie dargestellt in Figur 2, verbindet die Schalteinheit 36 keines der Abtriebsräder 44, 46 trieblich mit der Zwischenwelle 28. Vorzugsweise kann die Schalteinheit 36 als formschlüssige Schalteinheit ausgeführt sein, insbesondere als eine reine Klauenkupplung. Es ist allerdings auch möglich, dass die Schalteinheit 36 beispielsweise als eine reibschlüssige Schalteinheit ausgeführt ist. Eine Betätigung der Schalteinheit 36 kann von einer Steuereinheit 48, die insbesondere als eine Getriebesteuereinheit ausgeführt ist, gesteuert sein. Die Steuereinheit 48 kann dazu einen Aktuator 49, der zum Bewegen der Schalteinheit 36 ausgeführt ist, entsprechend ansteuern. Der Aktuator 49 kann bspw. als ein pneumatischer Aktuator oder ein elektromechanischer Aktuator ausgeführt sein. Die Steuereinheit 48 kann beispielsweise auch einen Betrieb der Antriebseinheit(en) 12 steuern.

Die dritte Übersetzungsstufe 38 verbindet die Zwischenwelle 28 trieblich mit der Ausgangswelle 30. Ein als Festrad ausgeführtes Antriebsrad 50 der dritten Übersetzungsstufe 38 ist drehfest auf der Zwischenwelle 28 angeordnet. Ein als Festrad ausgeführtes Abtriebsrad 52 der dritten Übersetzungsstufe 38 ist drehfest auf der Ausgangswelle 30 angeordnet. Die Räder 50 und 52 kämmen miteinander. Zweckmäßig ist die dritte Übersetzungsstufe 38 ebenfalls als eine Stirnradstufe mit zwei Stirnrädern ausgeführt. Die Ausgangswelle 30 ist vorzugsweise trieblich direkt mit der Gelenkwelle 16 (siehe Figur 1) verbunden.

Vorzugsweise weist die erste Übersetzungsstufe 32 eine Übersetzung (i) in einem Bereich zwischen 2,5 und 4,5 auf. Die zweite Übersetzungsstufe 34 weist bevorzugt eine Übersetzung (i) in einem Bereich zwischen 1 und 2,5 auf. Die dritte Übersetzungsstufe 38 weist vorzugsweise eine Übersetzung in einem Bereich zwischen 2,5 und 4 auf. Folglich wird erst am Ende des Getriebes 14A ein hohes Moment erzeugt. Ein geringer Bauraumbedarf wird dadurch begünstigt.

Zweckmäßig weist das Getriebe 14A neben den Übersetzungsstufe 32, 34 und 38 keine weitere Übersetzungsstufe und neben der Schalteinheit 36 keine weitere Schalteinheit auf. Das Getriebe 14A kann somit besonders kleinbauend, einfach und kostengünstig bzgl. Entwicklung und Herstellung sein.

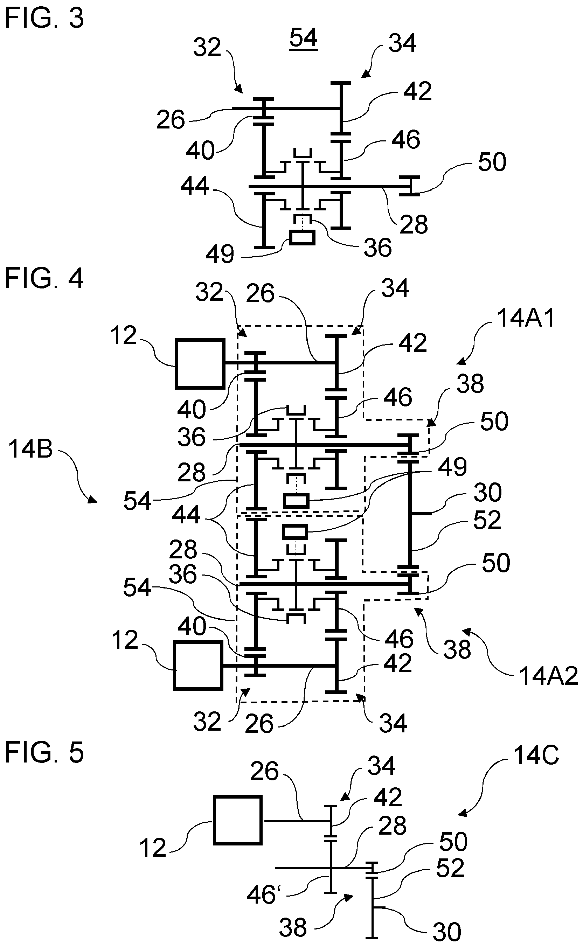

Es ist möglich, dass das Getriebe 14A aus einem modularen Getriebebaukasten abgeleitet ist. Der modulare Getriebebaukasten kann den Aufbau unterschiedlicher Getriebe mit einer großen Anzahl an Gleichteilen ermöglichen, um insbesondere Kosten zu sparen. Vorzugsweise kann der modulare Getriebebaukasten den Aufbau einiger oder aller von dem Getriebe 14A von Figur 2 und den Getrieben 14B-14E von den Figuren 4, 5 und 12 bis 16 ermöglichen.

Die Figur 3 zeigt ein Grundmodul 54, das von dem modularen Getriebebaukasten bevorzugt verwendet werden kann. Aus dem Grundmodul 54 lassen sich eine Vielzahl von unterschiedlichen Getrieben ableiten, insbesondere durch Mehrfachverwendung des Grundmoduls 54.

Das Grundmodul 54 kann besonders bevorzugt die bereits unter Bezugnahme auf die Figur 2 beschriebene Eingangswelle 26, Zwischenwelle 28, erste Übersetzungsstufe 32, zweite Übersetzungsstufe 34, Schalteinheit 36, den Aktuator 49 und optional das Antriebsrad 50 aufweisen. Das Grundmodul 54 kann ferner die Lager und/oder Dichtungen der Eingangswelle 26 und/oder der Zwischenwelle 28 aufweisen. Das Grundmodul 54 kann zusätzliche oder alternative Komponenten aufweisen. Insbesondere kann das Grundmodul 54 nur die erste Übersetzungsstufe 32, die zweite Übersetzungsstufe 34 und die Schalteinheit 36 aufweisen. Die Schalteinheit 36 kann beispielsweise im Bereich der Abtriebsräder der Übersetzungsstufen 32, 34 angeordnet sein, wie dargestellt ist. Alternativ kann die Schalteinheit 36 beispielsweise im Bereich der Antriebsräder der Übersetzungsstufen 32, 34 angeordnet sein (nicht dargestellt).

Es wird darauf hingewiesen, dass das Grundmodul 54 aus den genannten Komponenten gebildet werden kann, wobei der Achsenabstand zwischen der Eingangswelle 26 und der Zwischenwelle 28 bei jedem Grundmodul 54 gleich ist. Es ist allerdings möglich, dass bspw. aus Packagegründen eine Anpassung der räumlichen Anordnung zwischen der Eingangswelle 26 und der Zwischenwelle 28 bei Verwendung des Grundmoduls 54 vorgenommen wird. Eine Ebene, in der die Eingangswelle 26 und die Zwischenwelle verläuft, kann beim Verbauen des Grundmoduls 54 in unterschiedlichen Getrieben unterschiedlich sein, wobei der Achsabstand zwischen den Wellen 26, 28 gehalten wird.

Unter erneuter Bezugnahme auf die Figur 2 ist dargestellt, wie das Getriebe 14A aus dem Grundmodul 54 (dargestellt in gestrichelten Linien) abgeleitet werden kann. Das Getriebe 14A kann das Grundmodul 54 einmal verwenden und um das Abtriebsrad 52 und die Ausgangswelle 30 ergänzen, die bspw. anforderungsspezifisch angepasst sein können, um das Getriebe 14A zu schaffen.

Die Figur 4 zeigt ein Ausführungsbeispiel für das Getriebe 14 von Figur 1, das zum Abgrenzen von anderen Ausführungsbeispielen mit dem Bezugszeichen 14B versehen ist, und das Bestandteil des erfindungsgemäßen Antriebsstrangs ist.

Das Getriebe 14B ist als ein lastschaltbares Zweiganggetriebe ausgeführt. Das Getriebe 14B ist von zwei Antriebseinheiten 12 antreibbar. Das Getriebe 14B weist ein erstes Teilgetriebe 14A1 und ein zweites Teilgetriebe 14A2 auf. Die Teilgetriebe 14A1 und 14A2 können jeweils im Wesentlichen wie das Getriebe 14A von Figur 2 aufgebaut sein. Beide Teilgetriebe 14A1, 14A2 können sich eine gemeinsame Ausgangswelle 30 teilen.

Beide Teilgetriebe 14A1, 14A2 sind mit einer eigenen Antriebseinheit 12 trieblich verbunden. Die beiden Abtriebsräder 44 der Teilgetriebe 14A1, 14A2 kämmen nicht miteinander. Die Teilgetriebe 14A1, 14A2 sind parallelgeschaltet. Das Getriebe 14B ist als ein Summiergetriebe aus den beiden Teilgetrieben 14A1, 14A2 gebildet. Die Teilgetriebe 14A1, 14A2 sind abtriebsseitig an der Ausgangswelle 30 trieblich miteinander gekoppelt. Die Ausgangswelle 30 kann trieblich mit der Gelenkwelle 16 (siehe Figur 1) verbunden werden. Die Summation der Leistung erfolgt durch die dritten Übersetzungsstufen 38, an dem die Antriebsräder 50 beider Teilgetriebe 14A1, 14A2 mit demselben Abtriebsrad 52 kämmen. Je nach Anforderung kann das Getriebe 14B von nur einer oder von beiden der Antriebseinheiten 12 angetrieben werden. Die Schalteinheiten 36 können unabhängig voneinander schalten, z. B. gesteuert durch eine Steuereinheit (nicht gesondert dargestellt).

Wie erwähnt, kann das Getriebe 14B von Figur 4 aus dem gleichen modularen Getriebebaukasten abgeleitet werden wie das Getriebe 14A von Figur 2. Dadurch können viele Gleichteilkomponenten verwendet werden.

Besonders bevorzugt verwendet das Getriebe 14B wieder das Grundmodul 54 (siehe Figur 3). Das Grundmodul 54 kann zweifach/doppelt im Getriebe 14B bzw. jeweils einmal in jedem Teilgetriebe 14A1, 14A2 des Getriebes 14B verwendet werden. Die beiden Grundmodule 54 können beispielsweise um das Abtriebsrad 52 und die Ausgangswelle 30 ergänzt werden, die bspw. anforderungsspezifisch angepasst sein können.

Es ist möglich, dass nicht alle Komponenten des Grundmoduls 54 als Gleichteilkomponenten in den Getrieben 14A und 14B verwendet werden, wobei eine im Wesentliche gleiche Ausbildung bevorzugt ist. Beispielsweise können zwischen den Verzahnungen der dritten Übersetzungsstufen 38 bei den Getrieben 14A und 14B Mikrounterschiede bei gleicher Zähnezahl bestehen, um jeweils einen optimalen Eingriff des Antriebsrads 50 mit dem Abtriebsrad 52 bei dem Getriebe 14A und der beiden Antriebsräder 50 mit dem Abtriebsrad 52 bei dem Getriebe 14B zu gewährleisten. Weitere Unterschiede zwischen den Getrieben 14A und 14B (bzw. den Teilgetrieben 14A1, 14A2) können beispielsweise in jeweils angepassten Getriebegehäusen liegen.

Zusätzlich ist es möglich, dass das Grundmodul nicht nur zweifach, sondern häufiger miteinander in einem entsprechenden Summiergetriebe miteinander kombiniert werden kann, z. B dreifach oder vierfach. So kann bspw. ein Summiergetriebe aus drei oder mehr Grundmodulen aufgebaut werden, die jeweils von einer eigenen Antriebseinheit (insgesamt drei oder mehr Antriebseinheiten) angetrieben werden und abtriebsseitig miteinander verbunden sind.

Da sich die Belastung innerhalb des Grundmoduls auch bei mehrfacher Verwendung nicht ändert, muss dessen Auslegung und Dimensionierung auch bei Mehrfachverwendung nicht angepasst werden. Hierdurch ist eine sehr kosteneffiziente Abdeckung eines breiten Getriebe- und Antriebsstrangportfolios möglich.

Die Figur 5 zeigt ein weiteres Ausführungsbeispiel für das Getriebe 14 von Figur 1, das zum Abgrenzen von anderen Ausführungsbeispielen mit dem Bezugszeichen 14c versehen ist.

Das Getriebe 14C ist als ein Einganggetriebe mit konstanter Übersetzung ausgeführt. Das Getriebe 14C ist von einer Antriebseinheit 12 antreibbar.

Das Getriebe 14C kann ebenfalls aus dem Grundmodul 54 des modularen Getriebebaukastens abgeleitet werden, insbesondere durch Weglassen der ersten Übersetzungsstufe 32, Weglassen der Schalteinheit 36, Änderung des Losrads 46 (siehe Figur 3) in ein Festrad 46' und Ergänzung eines Abtriebsrads 52 und einer Ausgangswelle 30. Die Ausgangswelle 30 kann trieblich mit der Gelenkwelle 16 (siehe Figur 1) verbunden sein. Es ist möglich, dass das Getriebe 14C z. B. aus Packagegründen angepasste (kürzere) Wellen 26, 28 aufweist als das Grundmodul 54. Als Gleichteilkomponenten mit den Getrieben 14A und 14B kommen somit insbesondere das Antriebsrad 42 und das Antriebsrad 50 sowie die Lager und Dichtungen in der Wellen 26 und 28 in Betracht.

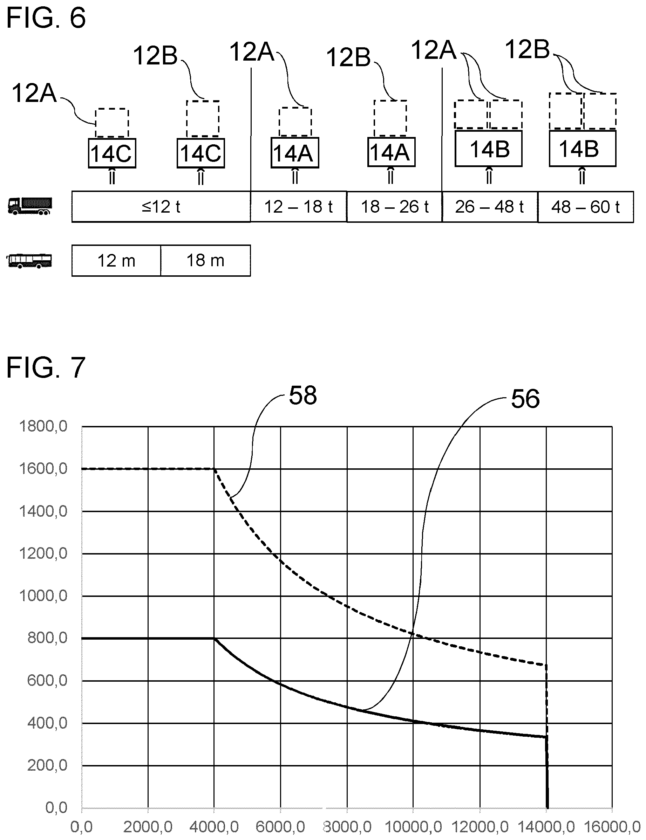

Die Figur 6 zeigt rein beispielhaft, wie mittels des beschriebenen modularen Getriebebaukastens der Aufbau eines breiten Antriebsstrangportfolios für unterschiedliche Anwendungen im Nutzfahrzeugbereich möglich ist.

Der modulare Antriebsstrangbaukasten kann zwei unterschiedliche, vorzugsweise elektrische, Antriebseinheiten 12A und 12B mit unterschiedlicher maximaler Leistungsausgabe aufweisen. Beispielsweise kann die Antriebseinheit 12B eine höhere Leistung als die Antriebseinheit 12A aufweisen. Der modulare Antriebsstrangbaukasten kann zudem den zuvor beschriebenen modularen Getriebebaukasten verwenden.

Lastkraftwagen bis beispielsweise 12 t können das (Eingang-)Getriebe 14C (siehe Figur 5) verwenden und je nach Anforderung die schwächere Antriebseinheit 12A oder die stärkere Antriebseinheit 12B. Ebenso können Omnibusse bis beispielsweise 12 Meter oder bis beispielsweise 18 Meter diese Antriebsstrangkonfigurationen verwenden. Es ist möglich, dass Omnibusse bis beispielsweise 18 Meter zwei Antriebsstränge gemäß der Antriebsstrangkonfiguration aufweisen.

Lastkraftwagen zwischen beispielsweise 12 t und 18 t können das (Zweigang-)Getriebe 14A (siehe Figur 2) und die Antriebseinheit 12A mit geringerer Leistung verwenden. Lastkraftwagen zwischen beispielsweise 18 t und 26 t können das (Zweigang-)Getriebe 14A (siehe Figur 2) und die stärkere Antriebseinheit 12B verwenden.

Lastkraftwagen zwischen beispielsweise 26 t und 48 t können das (Zweigang-)Getriebe 14B (siehe Figur 4) und zwei der schwächeren Antriebseinheiten 12A verwenden. Lastkraftwagen zwischen beispielsweise 48 t und 60 t können das (Zweigang-)Getriebe 14B (siehe Figur 4) und zwei der stärkeren Antriebseinheiten 12A verwenden.

Die modulare Konzeption des Antriebsstrangs und des Getriebes erlaubt es somit, eine gesamte Flotte von batterieelektrischen Nutzfahrzeugen auf einfache und kosteneffiziente Weise aufzubauen. Die Verwendung von jeweils zwei Antriebseinheiten 12A oder 12B bei den schweren Lastkraftwagen zwischen beispielsweise 26 t und 60 t kann auch aus Kostengründen sinnvoll sein, da die Verwendung einer einzigen großen Antriebseinheit überproportional teuer sein kann und sich bei Verwendung von jeweils zwei Antriebseinheiten größere Stückzahlen und somit größere Skaleneffekte erzielen lassen. Die gesamte Flotte kann lediglich zwei verschiedene Typen von Antriebseinheiten verwenden (siehe Figur 6).

Nachfolgend ist unter Bezugnahme auf die Figuren 4 und 7 bis 9 erläutert, wie die Lastschaltbarkeit zwischen den Gängen des Getriebes 14B erreicht werden kann.

Die Figur 7 zeigt ein Diagramm mit zwei beispielhaften Volllastkennlinien 56, 58. Eine Drehzahl der Antriebseinheiten ist auf der Abszisse (x-Achse) in U/min aufgetragen. Ein bereitgestelltes Drehmoment ist in Nm auf der Ordinate (Y-Achse) aufgetragen. Die Zahlenwerte auf den Achsen sind als rein beispielhaft anzusehen.

Die durchgezogene Volllastkennlinie 56 gibt ein dauerhaft fahrbares Volllastmoment für eine der Antriebseinheiten 12 an. Die Volllastkennlinie 58 gibt ein dauerhaft fahrbares Volllastmoment für beide Antriebseinheiten 12 an. Die gestrichelte Volllastkennlinie 58 ergibt sich aus einer Summation zweier Volllastkennlinien 56.

Schaltvorgänge des Getriebes 14B lassen sich grundsätzlich in zwei unterschiedliche Ausgangssituationen differenzieren.

Im ersten Fall kann ohne Zugkraftunterbrechung oder Zugkraftreduzierung geschaltet werden, da die vor und nach dem Schalten erforderliche Antriebsleistung, die z. B. von beiden Antriebseinheiten 12 aufbringbar ist, während des Schaltens (zumindest kurzzeitig) durch nur eine der beiden Antriebseinheiten 12 alleine bereitgestellt werden kann. Dies kann bezogen auf das Diagramm der Figur 7 beispielsweise der Fall sein, wenn ein Antriebsmoment erforderlich ist, das unterhalb oder auf der Kurve 56 liegt.

Im zweiten Fall kann nur mit einer Zugkraftreduzierung geschaltet werden, da die vor und nach dem Schalten erforderliche Antriebsleistung, die z. B. von beiden Antriebseinheiten 12 aufbringbar ist, während des Schaltens nicht durch nur eine der beiden Antriebseinheiten 12 alleine bereitgestellt werden kann. Dies kann bezogen auf das Diagramm der Figur 7 beispielsweise der Fall sein, wenn ein Antriebsmoment erforderlich ist, das zwischen den Kurven 58 und 56 liegt.

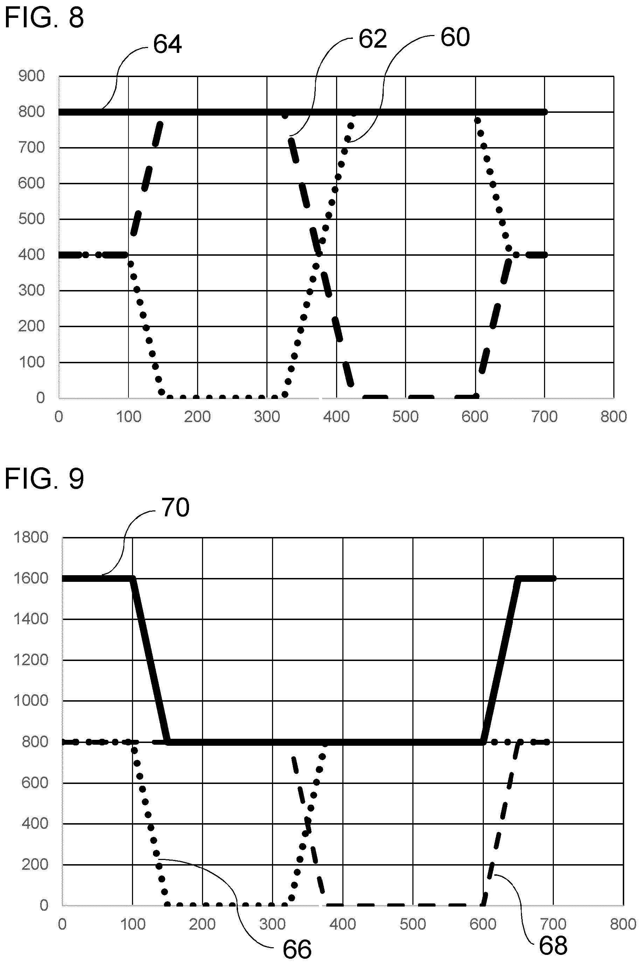

Die Figur 8 zeigt einen Schaltverlauf für den ersten Fall unter der Annahme, dass die Fahrzeuggeschwindigkeit während des Schaltvorgangs konstant bleibt. Die Leistungsanpassung erfolgt über das Antriebsmoment. Die Figur 8 zeigt ein Antriebsmomentenverlauf in Nm (y-Achse) aufgetragen über die Zeit in ms (X-Achse). Die Zahlenwerte auf den Achsen sind als rein beispielhaft anzusehen.

Die gepunktete Kurve 60 gibt ein Antriebsmoment der mit dem ersten Teilgetriebe 14A1 verbundenen Antriebseinheit 12 (z. B. die obere Antriebseinheit 12 in Figur 4) an. Die gestrichelte Kurve 62 gibt ein Antriebsmoment der mit dem zweiten Teilgetriebe 14A2 verbundenen Antriebseinheit 12 (z. B. die untere Antriebseinheit 12 in Figur 4) an. Die durchgezogene Kurve 64 wiederum gibt ein aus den Kurven 60 und 62 aufsummiertes Antriebsmoment an.

Vor dem Schaltvorgang verbinden beide Schalteinheiten 36 jeweils das als Losrad ausgeführte Abtriebsrad 44 trieblich mit der Zwischenwelle 28, und die Schalteinheiten 36 sollen jeweils auf das Abtriebsrad 46 umgeschaltet werden (oder umgekehrt). Die Schalteinheiten 36 können zweckmäßig nur im Wesentlichen lastfrei schalten. Um den Schaltvorgang zu initialisieren, beginnt die mit dem ersten Teilgetriebe 14A1 verbundene Antriebseinheit 12 zum Zeitpunkt 100 ms das Antriebsmoment zu reduzieren (siehe Kurve 60). Das Antriebsmoment kann bis auf annähernd null reduziert werden (ungefähr bei 150 ms). Gleichzeitig erhöht die mit dem zweiten Teilgetriebe 14A2 verbundene Antriebseinheit 12 ihr Antriebsmoment synchron (Kurve 62). Die Antriebsmomentreduzierung wird durch die Antriebsmomenterhöhung vollständig kompensiert. Das resultierende Antriebsmoment bleibt konstant (Kurve 64).

Sobald das Antriebsmoment der mit dem erstem Teilgetriebe 14A1 verbundenen Antriebseinheit 12 annähernd null ist (bei ca. 150 ms), beginnt die Schalteinheit 36 des ersten Teilgetriebes 14A1 zu schalten (zwischen 150 ms und 330 ms), und zwar von Abtriebsrad 44 zu Abtriebsrad 46. Die Schaltung kann im Westlichen lastfrei erfolgen. Während des Schaltens bleibt das resultierende Antriebsmoment konstant (Kurve 64), da es alleine von der Antriebseinheit 12 des zweiten Teilgetriebes 14A2 bereitgestellt werden kann.

Nach dem Schalten der Schalteinheit 36 des ersten Teilgetriebes 14A1 wird das Antriebsmoment der mit dem ersten Teilgetriebe 14A1 verbundenen Antriebseinheit 12 erhöht (Kurve 60). Das Antriebsmoment der mit dem zweiten Teilgetriebe 14A2 verbunden Antriebseinheit 12 wird gleichzeitig bis auf annähernd null reduziert (Kurve 62). Nun kann die Schalteinheit 36 des zweiten Teilgetriebes 14A2 schalten (bei ca. 420 ms), und zwar ebenfalls von Abtriebsrad 44 zu Abtriebsrad 46. Während des Schaltens bleibt das resultierende Antriebsmoment wieder konstant (Kurve 64), da es alleine von der Antriebseinheit 12 des ersten Teilgetriebes 14A1 bereitgestellt werden kann.

Nach dem Schalten der Schalteinheit 36 des zweiten Teilgetriebes 14A2 können die Antriebsmomente der beiden Antriebseinheiten 12 wieder aneinander angeglichen werden.

Die beiden Schalteinheiten 36 werden somit zeitverzögert nacheinander betätigt. Zwischen den Schaltvorgängen der beiden Schalteinheiten 36 werden die Antriebsmomente der Antriebseinheiten 12 wie erläutert angepasst.

Es ist möglich, dass zum Beginn oder zum Ende des Schaltvorgangs nicht beide Antriebseinheiten 12 das gleiche Antriebsmoment bereitstellen. Es kann beispielsweise auch eine der beiden Antriebseinheiten 12 gar kein Antriebsmoment bereitstellen.

Es ist auch möglich, dass die Antriebsmomenterhöhung der jeweils aktiven Antriebseinheit 12 während des Schaltvorgangs auf eine maximale Dauerleistung / Volllast nicht ausreicht, um die Antriebsmomentverringerung der anderen Antriebseinheit 12 vollständig zu kompensieren. In diesem Fall kann jedoch zumindest eine Zugkraftunterbrechung verhindert und eine Zugkraftverringerung während des Schaltvorgangs deutlich verringert werden.

Die Figur 9 zeigt einen Schaltverlauf für den zweiten Fall (nur mit Zugkraftreduzierung schaltbar). Die Figur 9 zeigt wieder ein Antriebsmomentenverlauf in Nm (y-Achse) aufgetragen über die Zeit in ms (x-Achse). Die Zahlenwerte auf den Achsen sind als rein beispielhaft anzusehen.

Die gepunktete Kurve 66 gibt ein Antriebsmoment der mit dem ersten Teilgetriebe 14A1 verbundenen Antriebseinheit 12 an. Die gestrichelte Kurve 68 gibt ein Antriebsmoment der mit dem zweiten Teilgetriebe 14A2 verbundenen Antriebseinheit 12 an. Die durchgezogene Kurve 70 wiederum gibt ein aus den Kurven 66 und 68 aufsummiertes Antriebsmoment an.

Vor dem Schaltvorgang verbinden beide Schalteinheiten 36 jeweils das Abtriebsrad 44 trieblich mit der Zwischenwelle 28, und die Schalteinheiten 36 sollen jeweils auf das Abtriebsrad 46 umgeschaltet werden (oder umgekehrt). Die Schalteinheiten 36 können zweckmäßig nur im Wesentlichen lastfrei schalten. Um den Schaltvorgang zu initialisieren, beginnt die mit dem ersten Teilgetriebe 14A1 verbundene Antriebseinheit 12 zum Zeitpunkt 100 ms das Antriebsmoment zu reduzieren (siehe Kurve 66). Das Antriebsmoment kann bis auf annähernd null reduziert werden (ungefähr bei 150 ms). Die mit dem zweiten Teilgetriebe 14A2 verbundene Antriebseinheit 12 erhöht ihr Antriebsmoment nicht (Kurve 68), da sie bereits unter Volllast betrieben wird. Die Antriebsmomentreduzierung wird nicht kompensiert. Das resultierende Antriebsmoment (Kurve 70) entspricht der mit dem zweiten Teilgetriebe 14A2 verbundenen Antriebseinheit 12 (Kurve 68). Es kommt zu einer Zugkraftverringerung.

Sobald das Antriebsmoment der mit dem erstem Teilgetriebe 14A1 verbundenen Antriebseinheit 12 annähernd null ist (bei ca. 150 ms), beginnt die Schalteinheit 36 des ersten Teilgetriebes 14A1 zu schalten (zwischen 150 ms und 330 ms), und zwar vom Abtriebsrad 44 zum Abtriebsrad 46. Die Schaltung kann im Westlichen lastfrei erfolgen. Während des Schaltens bleibt das resultierende Antriebsmoment konstant (Kurve 64), da es alleine von der Antriebseinheit 12 des zweiten Teilgetriebes 14A2 bereitgestellt wird.

Nach dem Schalten der Schalteinheit 36 des ersten Teilgetriebes 14A1 wird das Antriebsmoment der mit dem ersten Teilgetriebe 14A1 verbundenen Antriebseinheit 12 wieder bis auf Volllast erhöht (Kurve 66). Das Antriebsmoment der mit dem zweiten Teilgetriebe 14A2 verbunden Antriebseinheit 12 wird gleichzeitig bis auf annähernd null reduziert (Kurve 68). Nun kann die Schalteinheit 36 des zweiten Teilgetriebes 14A2 schalten (bei ca. 420 ms), und zwar auch vom Abtriebsrad 44 zum Abtriebsrad 46. Während des Schaltens bleibt das resultierende Antriebsmoment wieder konstant (Kurve 70), da es alleine von der Antriebseinheit 12 des ersten Teilgetriebes 14A1 bereitgestellt wird.

Nach dem Schalten der Schalteinheit 36 des zweiten Teilgetriebes 14A2 wird das Antriebsmoment der mit dem zweiten Teilgetriebe 14A2 verbundenen Antriebseinheit 12 wieder auf Volllast erhöht (Kurve 68). Das resultierende Antriebsmoment (Kurve 70) wird erhöht und entspricht dann wieder dem resultierenden Antriebsmoment vor dem gesamten Schaltvorgang. Es ist möglich, dass die Zugkraftverringerung im Beispiel von Figur 8 während des Schaltens dadurch verringert oder sogar vollständig kompensiert wird, dass die jeweils aktive Antriebseinheit während des Schaltvorgangs kurzzeitig mit der jeweils verfügbaren Spitzenleistung anstelle der maximalen Dauerleistung (wie dargestellt) betrieben wird.

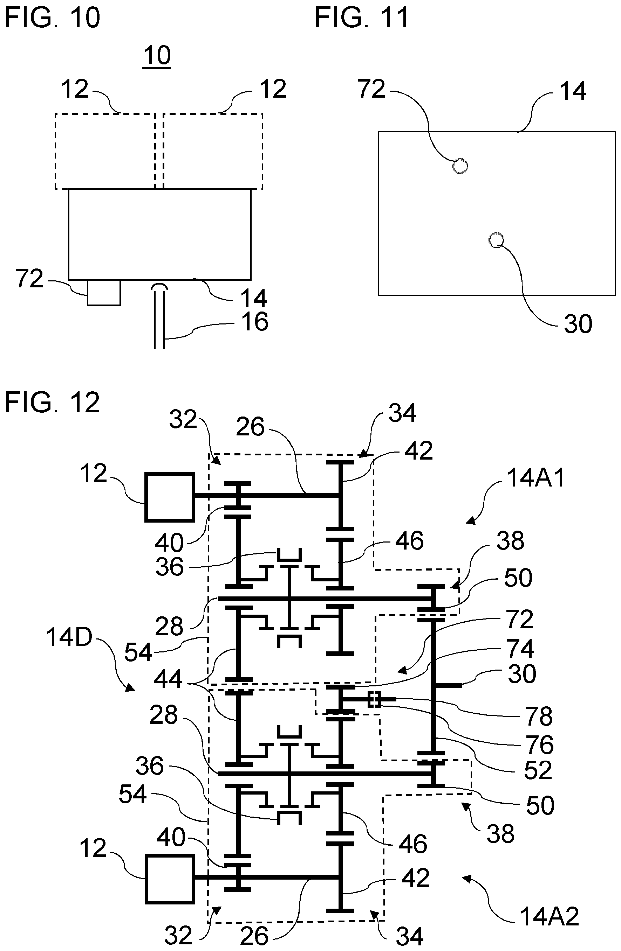

Nachfolgend ist unter Bezugnahme auf die Figuren 10 bis 16 ein Ausführungsbeispiel beschrieben, bei dem ein Getriebe einen Nebenabtrieb aufweist.

Die Figur 10 zeigt einen erfindungsgemäßen Antriebsstrang 10, der zwei, vorzugsweise elektrische, Antriebseinheiten 12 aufweist und ein Getriebe 14D aufweist. Das Getriebe 14D weist einen Nebenabtrieb 72 und einen Hauptabtrieb, der trieblich mit der Gelenkwelle 16 verbunden ist.

Die Figur 11 zeigt rein schematisch, dass der Nebenabtrieb 72 und der Hauptabtrieb in Form der Ausgangswelle 30 in einer Höhenrichtung und einer Breitenrichtung voneinander beabstandet sein können. Zusätzlich oder alternativ können der Nebenabtrieb 72 und die Ausgangswelle 30 auch in einer Längenrichtung voneinander beabstandet sein.

Die Figur 12 zeigt das Getriebe 14D, das mit den beiden Antriebseinheiten 12 trieblich verbunden ist, wobei diese Anordnung Bestandteil des erfindungsgemäßen Antriebsstrangs ist.

Das Getriebe 14D kann beispielsweise wie das Getriebe 14B von Figur 4 aufgebaut sein. Das zweite Teilgetriebe 14A2 kann den Nebenabtrieb 72 aufweisen. Das Grundmodul 54 des zweiten Teilgetriebes 14A2 kann um den Nebenabtrieb 72 ergänzt sein.

Es ist beispielsweise auch möglich, dass der Nebenabtrieb 72 in dem Getriebe 14A von Figur 2 ergänzt wird, z. B. am Abtriebsrad 46, oder in dem Getriebe 14C von Figur 5 ergänzt wird, z. B. am Abtriebsrad 46'.

Der Nebenabtrieb 72 kann ein (Neben-)Abtriebsrad bzw. Eingangsrad 74, eine Schalteinheit 76 und eine (Neben-)Abtriebswelle (Ausgangswelle) 78 als Ausgabeelement aufweisen. An der Abtriebswelle 78 können je nach Anforderung unterschiedliche Komponenten angeschlossen werden, z. B. Arbeitswerkzeuge, Wasserpumpen für Feuerwehrfahrzeuge oder Hydraulikpumpen für hydraulisch angetriebene Komponenten.

Das Eingangsrad 74 ist so angeordnet, dass es mit dem Abtriebsrad 46 des zweiten Teilgetriebes 14A2 kämmt. Die Schalteinheit 76 ist dazu ausgebildet, wahlweise das Eingangsrad 74 trieblich mit der Abtriebswelle 78 zu verbinden oder nicht zu verbinden. Die Schalteinheit 76 kann beispielsweise als formschlüssige oder reibschlüssige Schalteinheit, vorzugsweise Kupplung, ausgeführt sein.

Sofern die mit dem zweiten Teilgetriebe 14A2 verbundene Antriebseinheit 12 aktiviert ist, wird das Eingangsrad 74 des Nebenabtriebs 72 gedreht, unabhängig von einer Schaltstellung der Schalteinheit 36 des zweiten Teilgetriebes 14A2. Der Nebenabtrieb 72 wird von der Antriebseinheit 12 des zweiten Teilgetriebes 14A2 angetrieben. Eine Stellung der Schalteinheit 76 bestimmt, ob die Abtriebswelle 78 des Nebenabtriebs 72 gedreht wird oder nicht.

Das Getriebe 14D ermöglicht in unterschiedlichen Schaltstellungen der Schalteinheiten 36 und 72, dass eine oder beide Antriebseinheiten 12 die Ausgangswelle 30 antreiben und/oder die Abtriebswelle 78 des Nebenabtriebs 72 antreiben. Insbesondere ermöglicht das Getriebe 14D, das die mit dem ersten Teilgetriebe 14A1 verbundene Antriebseinheit 12 nur die Ausgangswelle 30 antreiben kann (und das Kraftfahrzeug somit fahren) und dass die mit dem zweiten Teilgetriebe 14A2 verbundene Antriebseinheit 12 nur die Abtriebswelle 78 des Nebenabtriebs 72 antreibt.

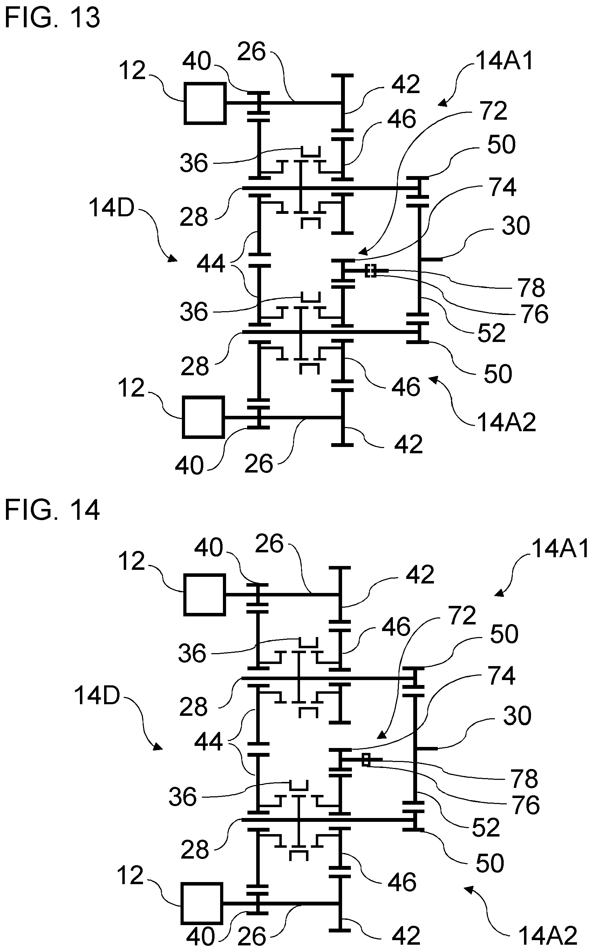

Nachfolgend sind unter Bezugnahme auf die Figuren 13 bis 15 Kombinationen von Schaltstellungen des Getriebes 14D erläutert. Die Figuren 13 bis 15 zeigen jeweils das Getriebe 14D von Figur 12, wobei einige der Bezugszeichen zur besseren Übersicht über die Schaltstellungen der Schalteinheiten 36, 76 nicht dargestellt sind.

In der Figur 13 verbindet die Schalteinheit 36 des ersten Teilgetriebes 14A1 das Abtriebsrad 46 trieblich mit der Zwischenwelle 28 des ersten Teilgetriebes 14A1. Die Schalteinheit 36 des zweiten Teilgetriebes 14A2 verbindet das Abtriebsrad 46 trieblich mit der Zwischenwelle 28 des zweiten Teilgetriebes 14A2. Die Schalteinheit 76 des Nebenabtriebs 72 ist offen. Das Kraftfahrzeug kann somit von beiden Antriebseinheiten 12 gleichzeitig angetrieben werden (Lastfluss je Teilgetriebe 14A1, 14A2 jeweils z. B.: Antriebseinheit 12 zu Eingangswelle 26 zu Antriebsrad 42 zu Abtriebsrad 46 zu Schalteinheit 36 zu Zwischenwelle 28 zu Antriebsrad 50 zu Abtriebsrad 52 zu Ausgangswelle 30)). Die Abtriebswelle 78 des Nebenabtriebs 72 ist nicht angetrieben. Selbiges lässt sich zum Beispiel auch erreichen, wenn die Schalteinheiten 36 jeweils die Antriebsräder 44 trieblich mit der Zwischenwelle 28 des jeweiligen Teilgetriebes 14A1, 14A2 verbinden.

In der Figur 14 verbindet die Schalteinheit 36 des ersten Teilgetriebes 14A1 das Abtriebsrad 46 trieblich mit der Zwischenwelle 28 des ersten Teilgetriebes 14A1. Die Schalteinheit 36 des ersten Teilgetriebes 14A1 kann auch das Antriebsrad 44 mit der Zwischenwelle 28 trieblich verbinden. Die Schalteinheit 36 des zweiten Teilgetriebes 14A2 ist in einer Neutralstellung. Die Schalteinheit 76 des Nebenabtriebs 72 ist geschlossen. Das Kraftfahrzeug kann somit von der mit dem ersten Teilgetriebe 14A1 verbundenen Antriebseinheit 12 angetrieben werden (Lastfluss im ersten Teilgetriebe 14A1 z. B.: Antriebseinheit 12 zu Eingangswelle 26 zu Antriebsrad 42 zu Abtriebsrad 46 zu Schalteinheit 36 zu Zwischenwelle 28 zu Antriebsrad 50 zu Abtriebsrad 52 zu Ausgangswelle 30). Gleichzeitig kann die Abtriebswelle 78 des Nebenabtriebs 72 von der mit dem zweiten Teilgetriebe 14A2 verbundenen Antriebseinheit 12 angetrieben werden (Lastfluss im zweiten Teilgetriebe 14A2 z. B.: Antriebseinheit 12 zu Eingangswelle 26 zu Antriebsrad 42 zu Abtriebsrad 46 zu Eingangsrad 74 zu Schalteinheit 76 zu Abtriebswelle 78).

Das zweite Teilgetriebe 14A2 und die damit verbundene Antriebseinheit 12 arbeiten unabhängig von dem ersten Teilgetriebe 14A1 und der damit verbundenen Antriebseinheit 12. Somit kann die Leistungsanforderungen des Nebenabtriebs 72 drehmoment- und drehzahlspezifisch erfüllt werden.

Beispielsweise kann von der in Figur 13 gezeigten Schaltstellung zu der in der Figur 14 gezeigten Schaltstellung umgeschaltet werden, wenn der Nebenabtrieb 72 zugeschaltet werden soll. Dazu schaltet die Schalteinheit 36 des zweiten Teilgetriebes 14A2 in die Neutralstellung. Die Eingangswelle 26 des zweiten Teilgetriebes 14A2 wird z. B. von der verbundenen Antriebseinheit 12 abgebremst, sodass die Schalteinheit 76 geschlossen werden kann.

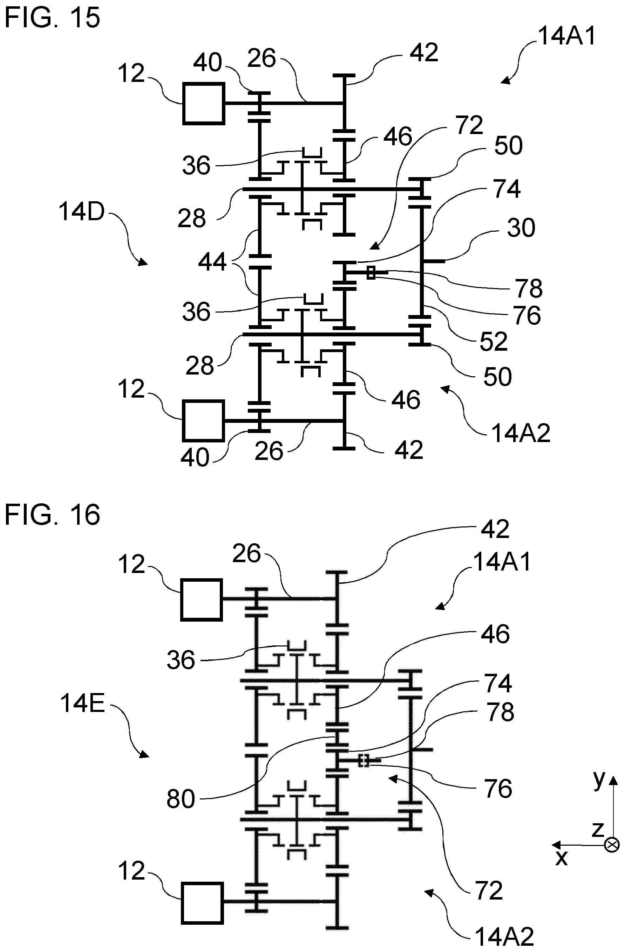

In der Figur 15 verbindet die Schalteinheit 36 des ersten Teilgetriebes 14A1 das Abtriebsrad 46 trieblich mit der Zwischenwelle 28 des ersten Teilgetriebes 14A1. Die Schalteinheit 36 des ersten Teilgetriebes 14A1 kann auch das Abtriebsrad 44 mit der Zwischenwelle 28 trieblich verbinden. Die Schalteinheit 36 des zweiten Teilgetriebes 14A2 verbindet das Abtriebsrad 46 trieblich mit der Zwischenwelle 28 des zweiten Teilgetriebes 14A2. Die Schalteinheit 36 des ersten Teilgetriebes 14A1 kann auch das Abtriebsrad 44 mit der Zwischenwelle 28 trieblich verbinden. Die Schalteinheit 76 des Nebenabtriebs 72 ist geschlossen. Das Kraftfahrzeug kann somit von beiden Antriebseinheiten 12 angetrieben werden (Lastfluss je Teilgetriebe 14A1, 14A2 z. B.: Antriebseinheit 12 zu Eingangswelle 26 zu Antriebsrad 42 zu Abtriebsrad 46 zu Schalteinheit 36 zu Zwischenwelle 28 zu Antriebsrad 50 zu Abtriebsrad 52 zu Ausgangswelle 30). Gleichzeitig kann die Abtriebswelle 78 des Nebenabtriebs 72 von der mit dem zweiten Teilgetriebe 14A2 verbundenen Antriebseinheit 12 angetrieben werden (Lastfluss im zweiten Teilgetriebe 14A2 z. B.: Antriebseinheit 12 zu Eingangswelle 26 zu Antriebsrad 42 zu Abtriebsrad 46 zu Eingangsrad 74 zu Schalteinheit 76 zu Abtriebswelle 78). Der Nebenabtrieb 72 kann zusätzlich auch noch von der Antriebseinheit 12, die mit dem ersten Teilgetriebe 14A1 verbunden ist, angetrieben werden.

Die Schaltstellung der Figur 15 kann bspw. verwendet werden, wenn die erforderliche Antriebsleistung zum Antrieben des Kraftfahrzeugs nicht allein durch die mit dem ersten Teilgetriebe 14A1 verbundene Antriebseinheit 12 alleine bereitgestellt werden kann. Die erforderliche Differenzleistung $P_{diff}$ kann über die Antriebseinheit 12, die mit dem zweiten Teilgetriebe 14A2 verbunden ist, bereitgestellt werden. Die Differenzleistung $P_{diff}$ ergibt sich als Differenz aus der der maximalen (Dauer-)Antriebsleistung $P_{\max(A2)}$ der Antriebseinheit 12, die mit dem zweiten Teilgetriebe 14A2 verbunden ist, und der zum Antrieben des Nebenabtriebs 72 bereitgestellten Antriebsleistung $P_{PTO}$.

$$P_{diff} = P_{\max(A2)} - P_{PTO}$$

Zum Einnehmen der Schaltstellung kann die Drehzahl der Eingangswelle 26 des zweiten Teilgetriebes 14A2 an die Drehzahl der Eingangswelle 26 des ersten Teilgetriebes 14A2 angeglichen werden, z. B. mittels der Antriebseinheit 12. Die Schalteinheit 36 des zweiten Teilgetriebes 14A2 verbindet das Abtriebsrad 46 trieblich mit der Zwischenwelle 28. An der Ausgangswelle 30 kann das zweite Teilgetriebe 14A2 nun mittels des Antriebsrads 50 die Leistung $P_{diff}$ zuführen. In diesem Fall kann die Leistungsanforderung des Nebenabtriebs 72 nur drehmomentspezifisch erfüllt werden. Diese Betriebsweise kann nur im zweiten Gang möglich sein.

Falls erforderlich kann der Lastfluss zum Nebenabtrieb 72 sowohl im Stillstand als auch während der Fahrt über die Schalteinheit 76 abgekoppelt werden, so dass beide Antriebseinheiten 12 zum Antrieben des Kraftfahrzeugs zur Verfügung stehen. Falls erforderlich kann der Lastfluss zum Nebenabtrieb 72 sowohl im Stillstand als auch während der Fahrt über die Schalteinheit 76 eingekoppelt werden.

Die Figur 16 zeigt ein Getriebe 14E, das eine Weiterbildung zum Getriebe 14D darstellt. Aus Übersichtsgründen sind nur wenige Bezugseichen angegeben.

Das Getriebe 14E weist ein zusätzliches Koppelelement in Form eines (Abtriebs-)Rads 80 auf.

Das Abtriebsrad 80 kann das Abtriebsrad 46 des ersten Teilgetriebes 14A1 mit dem Eingangsrad 74 des Nebenantriebs 72 trieblich verbinden. Das Abtriebsrad 80 ist verschiebbar im Getriebe 14E aufgenommen, um wahlweise eine triebliche Verbindung zwischen dem Abtriebsrad 46 des ersten Teilgetriebes 14A1 und dem Eingangsrad 74 des Nebenantriebs 72 zu schaffen oder zu trennen. Beispielsweise kann ein Zahnradmittelpunkt des Abtriebsrads 80 innerhalb einer y-z-Ebene (bezogen auf das Kraftfahrzeug und wie in Figur 16 angegeben) mechanisch verschoben werden, um wahlweise in Eingriff oder außer Eingriff mit dem Abtriebsrad 46 des ersten Teilgetriebes 14A1 und dem Eingangsrad 74 des Nebenantriebs 72 zu kommen.

Das Getriebe 14E ermöglicht insbesondere für Anwendungen, die hohe Leistungsanforderungen an den Nebenabtrieb 72 stellen, dass optional auch die mit dem ersten Teilgetriebe 14A1 verbundene Antriebseinheit 12 zum Antrieben des Nebenabtrieb 72 trieblich verbunden werden kann (Lastfluss im ersten Teilgetriebe 14A1 z. B.: Antriebseinheit 12 zu Eingangswelle 26 zu Antriebsrad 42 zu Abtriebsrad 46 zu Abtriebsrad 80 zu Eingangsrad 74 zu Schalteinheit 76 zu Abtriebswelle 78). Diese Betriebsweise ist zweckmäßig nur im Stand und bei Neutralstellung beider Schalteinheiten 36 möglich.

Die Erfindung ist nicht auf die vorstehend beschriebenen bevorzugten Ausführungsbeispiele beschränkt. Vielmehr ist im Rahmen der Ansprüche eine Vielzahl von Varianten und Abwandlungen möglich, die ebenfalls von dem Erfindungsgedanken Gebrauch machen und deshalb in den Schutzbereich fallen, welcher durch die nachfolgenden Ansprüche definiert wird. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart.

Bezugszeichenliste

| | |
|---|---|
| 10 | Antriebsstrang |
| 12 | Antriebseinheit |
| 12A | Antriebseinheit |
| 12B | Antriebseinheit |
| 14 | Getriebe |
| 14A | Getriebe |
| 14A1 | Erstes Teilgetriebe |
| 14A2 | Zweites Teilgetriebe |
| 14B | Getriebe |
| 14C | Getriebe |
| 14D | Getriebe |
| 14E | Getriebe |
| 16 | Gelenkwelle |
| 18 | Achsgetriebe |
| 20 | Radwelle |
| 22 | Rad |
| 24 | Traktionsenergiespeicher |
| 26 | Eingangswelle |
| 28 | Zwischenwelle |
| 30 | Ausgangswelle |
| 32 | Erste Übersetzungsstufe |
| 34 | Zweite Übersetzungsstufe |
| 36 | Schalteinheit |
| 38 | Dritte Übersetzungsstufe |
| 40 | Antriebsrad (z. B. Festrad) |
| 42 | Antriebsrad (z. B. Festrad) |
| 44 | Abtriebsrad (z. B. Losrad) |
| 46 | Abtriebsrad (z. B. Losrad) |
| 46' | Abtriebsrad (Festrad) |
| 48 | Steuereinheit |
| 49 | Aktuator |
| 50 | Antriebsrad (z. B. Festrad) |
| 52 | Abtriebsrad (z. B. Festrad) |
| 54 | Grundmodul |
| 56 | Volllastkennlinie |
| 58 | Volllastkennlinie |
| 60 | Antriebsmomentkurve |
| 62 | Antriebsmomentkurve |
| 64 | Resultierende Antriebsmomentkurve |
| 66 | Antriebsmomentkurve |
| 68 | Antriebsmomentkurve |
| 70 | Resultierende Antriebsmomentkurve |
| 72 | Nebenabtrieb |
| 74 | Eingangsrad |
| 76 | Schalteinheit |
| 78 | Abtriebswelle |
| 80 | Abtriebsrad |

**Patentansprüche**

1. Antriebsstrang (10) für ein Kraftfahrzeug, vorzugsweise ein Nutzfahrzeug, aufweisend:

ein Getriebe (14B), vorzugsweise Zweiganggetriebe, für ein Kraftfahrzeug, aufweisend:

ein erstes Teilgetriebe (14A1), das zwei Übersetzungsstufen (32, 34) und eine Schalteinheit (36) zum Schalten zwischen den zwei Übersetzungsstufen (32, 34) aufweist;
ein zweites Teilgetriebe (14A2), das zwei Übersetzungsstufen (32, 34) und eine Schalteinheit (36) zum Schalten zwischen den zwei Übersetzungsstufen (32, 34) aufweist;
ein Ausgangselement (30), das trieblich mit einem Abtrieb des ersten Teilgetriebes (14A1) und einem Abtrieb des zweiten Teilgetriebes (14A2) verbunden ist; und
eine Steuereinheit (48), die zum Steuern eines Gangwechsels des Getriebes (14B) ausgebildet ist, wobei für den Gangwechsel ein Schalten der Schalteinheit (36) des ersten Teilgetriebes (14A1) und der Schalteinheit (36) des zweiten Teilgetriebes (14A2) zeitversetzt, vorzugsweise sequentiell, erfolgt;

eine erste, vorzugsweise elektrische, Antriebseinheit (12), die trieblich mit dem ersten Teilgetriebe (14A1) verbunden ist; und
eine zweite, vorzugsweise elektrische, Antriebseinheit (12), die trieblich mit dem zweiten Teilgetriebe (14A2) verbunden ist;
**dadurch gekennzeichnet, dass** die Steuereinheit (48) dazu ausgebildet ist, dass:

während des Schaltens der Schalteinheit (36) eines der Teilgetriebe (14A1, 14A2) eine Antriebsleistungsverringerung der Antriebseinheit (12), die mit dem Teilgetriebe (14A1), dessen Schalteinheit (36) gerade schaltet, verbunden ist, durch eine Antriebsleistungserhöhung derjenigen Antriebseinheit (12), die trieblich mit dem Teilgetriebe (14A2), dessen Schalteinheit (36) gerade nicht schaltet, verbunden ist, zumindest teilweise kompensiert wird, vorzugsweise für beide Antriebseinheiten (12) nacheinander; und/oder
vor dem Schalten der Schalteinheiten (36) der Teilgetriebe (14A1, 14A2) eine Antriebsleistungsverringerung derjenigen Antriebseinheit (12), die mit dem Teilgetriebe (14A1), dessen Schalteinheit (36) zuerst schaltet, verbunden ist, vorgenommen wird und eine, vorzugsweise synchrone und/oder gleichzeitige, Antriebsleistungserhöhung derjenigen Antriebseinheit (12), die mit dem Teilgetriebe (14A2), dessen Schalteinheit (36) zeitverzögert schaltet, verbunden ist, vorgenommen wird; und/oder
zwischen dem Schalten der Schalteinheiten (36) der Teilgetriebe (14A1, 14A2) eine Antriebsleistungsverringerung derjenigen Antriebseinheit (12), die mit dem Teilgetriebe (14A2), dessen Schalteinheit (36) zeitverzögert schaltet, verbunden ist, vorgenommen wird und eine, vorzugsweise synchrone und/oder gleichzeitige, Antriebsleistungserhöhung derjenigen Antriebseinheit (12), die mit dem Teilgetriebe (14A1), dessen Schalteinheit (36) gerade geschaltet hat, verbunden ist, vorgenommen wird; und/oder
nach dem Schalten der Schalteinheiten (36) der Teilgetriebe (14A1, 14A2) eine Antriebsleistungsverringerung derjenigen Antriebseinheit (12), die mit dem Teilgetriebe (14A1), dessen Schalteinheit (36) zuerst geschaltet hat, verbunden ist, vorgenommen wird und eine, vorzugsweise synchrone und/oder gleichzeitige, Antriebsleistungserhöhung derjenigen Antriebseinheit (12), die mit dem Teilgetriebe (14A2), dessen Schalteinheit (36) zeitverzögert geschaltet hat, verbunden ist, vorgenommen wird.

2. Antriebsstrang (10) nach Anspruch 1, wobei die Steuereinheit (48) dazu ausgebildet ist, dass:
zunächst die Schalteinheit (36) des ersten Teilgetriebes (14A1) schaltet und dann die Schalteinheit (36) des zweiten Teilgetriebes (14A2) schaltet, vorzugsweise nach Abschluss des Schaltens der Schalteinheit (36) des ersten Teilgetriebes (14A1) und/oder vorzugsweise nach Verstreichen einer Zeitdauer bis die Schalteinheit (36) des zweiten Teilgetriebes (14A2) annähernd lastfrei ist.

3. Antriebsstrang (10) nach Anspruch 1 oder Anspruch 2, wobei die Steuereinheit (48) dazu ausgebildet ist, dass:
das erste Teilgetriebe (14A1) und das zweite Teilgetriebe (14A2) während des Gangwechsels nacheinander eine Antriebsleistung durch das Getriebe (14B) übertragen, wobei vorzugsweise jeweils die Schalteinheit (36) eines der Teilgetriebe (14A1, 14A2) schaltet und das jeweils andere der Teilgetriebe (14A1, 14A2) die Antriebsleistung überträgt.

4. Antriebsstrang (10) nach einem der vorherigen Ansprüche, wobei:

die zwei Übersetzungsstufen (32, 34) des ersten Teilgetriebes (14A1) die gleichen Übersetzungen aufweisen wie die zwei Übersetzungsstufen (32, 34) des zweiten Teilgetriebes (14A2); und/oder

die zwei Übersetzungsstufen (32, 34) des ersten Teilgetriebes (14A1) und die zwei Übersetzungsstufen (32, 34) des zweiten Teilgetriebes (14A2) als Gleichteilkomponenten ausgebildet sind.

5. Antriebsstrang (10) nach einem der vorherigen Ansprüche, wobei:

das erste Teilgetriebe (14A1) und das zweite Teilgetriebe (14A2) gleich viele Gänge aufweisen; und/oder
das erste Teilgetriebe (14A1) und das zweite Teilgetriebe (14A2) jeweils als Zweiganggetriebe ausgeführt sind; und/oder
das erste Teilgetriebe (14A1) und das zweite Teilgetriebe (14A2) im Wesentlichen gleich aufgebaut sind.

6. Antriebsstrang (10) nach einem der vorherigen Ansprüche, wobei:
die Schalteinheit (36) des ersten Teilgetriebes (14A1) und die Schalteinheit (36) des zweiten Teilgetriebes (14A2) unabhängig voneinander schaltbar sind.

7. Antriebsstrang (10) nach einem der vorherigen Ansprüche, wobei:

das Getriebe (14B) als ein Summiergetriebe aus dem ersten Teilgetriebe (14A1) und dem zweiten Teilgetriebe (14A2) gebildet ist; und/oder
das erste Teilgetriebe (14A1) und das zweite Teilgetriebe (14A2) parallel geschaltet sind.

8. Antriebsstrang (10) nach einem der vorherigen Ansprüche, wobei:

das Getriebe (14B) lastschaltbar ist; und/oder
das erste Teilgetriebe (14A1) und das zweite Teilgetriebe (14A2) jeweils nicht-lastschaltbar sind.

9. Antriebsstrang (10) nach einem der vorherigen Ansprüche, wobei:

die Schalteinheit (36) des ersten Teilgetriebes (14A1) und/oder die Schalteinheit (36) des zweiten Teilgetriebes (14A2) zum nur im Wesentlichen lastfreien Schalten ausgeführt ist; und/oder
die Schalteinheit (36) des ersten Teilgetriebes (14A1) und/oder die Schalteinheit (36) des zweiten Teilgetriebes (14A2) als eine formschlüssige Schalteinheit ausgebildet ist, vorzugsweise als Klauenkupplung.

10. Antriebsstrang (10) nach einem der vorherigen Ansprüche, wobei:

die zwei Übersetzungsstufen (32, 34) des ersten Teilgetriebes (14A1) und/oder die zwei Übersetzungsstufen (32, 34) des zweiten Teilgetriebes (14A2) als Radstufen, vorzugsweise Stirnradstufen, ausgebildet sind.

11. Antriebsstrang (10) nach einem der vorherigen Ansprüche, wobei das erste Teilgetriebe (14A1) und das zweite Teilgetriebe (14A1) jeweils aufweisen:

eine Eingangswelle (26);
eine Zwischenwelle (28);
die zwei Übersetzungsstufen (32, 34), über die die Eingangswelle (26) jeweils trieblich mit der Zwischenwelle (28) verbindbar ist;
die Schalteinheit (36), über die wahlweise die eine oder die andere der zwei Übersetzungsstufen (32, 34) trieblich mit der Eingangswelle (26) oder der Zwischenwelle (28) verbindbar ist;
eine dritte Übersetzungsstufe (38), über die die Zwischenwelle (28) trieblich mit dem Ausgangselement (30) verbunden ist.

12. Antriebsstrang (10) nach einem der vorherigen Ansprüche:

eine Antriebsleistungserhöhung während des Gangwechsels temporär maximal auf über eine Nennleistung der jeweiligen Antriebseinheit (12) gesteigert wird oder steigerbar ist; oder
eine Antriebsleistungserhöhung während des Gangwechsels temporär maximal nur bis zu einer Nennleistung der jeweiligen Antriebseinheit (12) gesteigert wird oder steigerbar ist.

13. Kraftfahrzeug, vorzugsweise Nutzfahrzeug, aufweisend den Antriebsstrang (10) nach einem der vorherigen Ansprüche.

**Claims**

1. A drive train (10) for a motor vehicle, preferably a utility vehicle, comprising:

a transmission (14B), preferably a two-speed transmission, for a motor vehicle, comprising:

a first sub-transmission (14A1) comprising two transmission stages (32, 34) and a shifting unit (36) for shifting between the two transmission stages (32, 34);
a second sub-transmission (14A2) comprising two transmission stages (32, 34) and a shifting unit (36) for shifting between the two transmission stages (32, 34);
an output element (30) which is drivingly connected to an output of the first sub-transmission (14A1) and an output of the second sub-transmission (14A2); and;
a control unit (48) which is configured to control a gear change of the transmission (14B), wherein for the gear change a shifting of the shifting unit (36) of the first sub-transmission (14A1) and the shifting unit (36) of the second sub-transmission (14A2) takes place with a time delay, preferably sequentially;

a first, preferably electric, drive unit (12) which is drivingly connected to the first sub-transmission (14A1); and
a second, preferably electric, drive unit (12) which is drivingly connected to the second sub-transmission (14A2);
**characterized in that** the control unit (48) is configured such that:

during the shifting of the shifting unit (36) of one of the sub-transmissions (14A1, 14A2), a drive power reduction of the drive unit (12) which is connected to the sub-transmission (14A1) whose shifting unit (36) is currently shifting is at least partially compensated for by a drive power increase of that drive unit (12) which is drivingly connected to the sub-transmission (14A2) whose shifting unit (36) is currently not shifting, preferably for both drive units (12) in succession; and/or
before the shifting of the shifting units (36) of the sub-transmissions (14A1, 14A2), a drive power reduction of that drive unit (12) which is connected to the sub-transmission (14A1) whose shifting unit (36) shifts first is carried out and a, preferably synchronous and/or simultaneous, drive power increase of that drive unit (12) which is connected to the sub-transmission (14A2) whose shifting unit (36) shifts with a time delay is carried out; and/or
between the shifting of the shifting units (36) of the sub-transmissions (14A1, 14A2), a drive power reduction of that drive unit (12) which is connected to the sub-transmission (14A2) whose shifting unit (36) shifts with a time delay is carried out and a, preferably synchronous and/or simultaneous, drive power increase of that drive unit (12) which is connected to the sub-transmission (14A1) whose shifting unit (36) has just shifted is carried out; and/or
after the shifting of the shifting units (36) of the sub-transmissions (14A1, 14A2), drive power reduction of that drive unit (12) which is connected to the sub-transmission (14A1) whose shifting unit (36) has shifted first is carried out and a, preferably synchronous and/or simultaneous, drive power increase of that the drive unit (12) which is connected to the sub-transmission (14A2) whose shifting unit (36) has shifted with a time delay is carried out.

2.  The drive train (10) according to claim 1, wherein the control unit (48) is configured such that:
    first the shifting unit (36) of the first sub-transmission (14A1) shifts and then the shifting unit (36) of the second sub-transmission (14A2) shifts, preferably after the shifting unit (36) of the first sub-transmission (14A1) has finished shifting and/or preferably after a period of time has elapsed until the shifting unit (36) of the second sub-transmission (14A2) is approximately load-free.

3.  The drive train (10) according to claim 1 or claim 2, wherein the control unit (48) is configured such that:
    the first sub-transmission (14A1) and the second sub-transmission (14A2) successively transmit a drive power through the transmission (14B) during the gear change, wherein preferably the shifting unit (36) of one of the sub-transmissions (14A1, 14A2) shifts in each case and the respective other of the sub-transmissions (14A1, 14A2) transmits the drive power.

4.  The drive train (10) according to one of the previous claims, wherein:

    the two transmission stages (32, 34) of the first sub-transmission (14A1) comprise the same transmission ratios as the two transmission stages (32, 34) of the second sub-transmission (14A2); and/or
    the two transmission stages (32, 34) of the first sub-transmission (14A1) and the two transmission stages (32, 34) of the second sub-transmission (14A2) are configured as identical components.

5.  The drive train (10) according to one of the previous claims, wherein:

    the first sub-transmission (14A1) and the second sub-transmission (14A2) comprise the same number of gears; and/or
    the first sub-transmission (14A1) and the second sub-transmission (14A2) are each configured as a two-speed transmission; and/or
    the first sub-transmission (14A1) and the second sub-transmission (14A2) have substantially the same structure.

6.  The drive train (10) according to one of the previous claims, wherein:
    the shifting unit (36) of the first sub-transmission (14A1) and the shifting unit (36) of the second sub-transmission (14A2) are shiftable independently of each other.

7.  The drive train (10) according to one of the previous claims, wherein:

    the transmission (14B) is formed as a summing transmission of the first sub-transmission (14A1) and the second sub-transmission (14A2); and/or
    the first sub-transmission (14A1) and the second sub-transmission (14A2) are connected in parallel.

8.  The drive train (10) according to one of the previous claims, wherein:

    the transmission (14B) is load-free shiftable; and/or
    the first sub-transmission (14A1) and the second sub-transmission (14A2) are each non-load-free shiftable.

9.  The drive train (10) according to one of the previous claims, wherein:

    the shifting unit (36) of the first sub-transmission (14A1) and/or the shifting unit (36) of the second sub-transmission (14A2) is configured for only substantially load-free shifting; and/or
    the shifting unit (36) of the first sub-transmission (14A1) and/or the shifting unit (36) of the second sub-transmission (14A2) is configured as a positive-locking shifting unit, preferably as a claw clutch.

10. The drive train (10) according to one of the previous claims, wherein:
    the two transmission stages (32, 34) of the first sub-transmission (14A1) and/or the two transmission stages (32, 34) of the second sub-transmission (14A2) are configured as gear stages, preferably spur gear stages.

11. The drive train (10) according to one of the previous claims, wherein the first sub-transmission (14A1) and the second sub-transmission (14A1) each comprise:

    an input shaft (26);
    an intermediate shaft (28);
    the two transmission stages (32, 34), via which the input shaft (26) can be drivingly connected to the intermediate shaft (28) in each case;
    the shifting unit (36), via which either one or the other of the two transmission stages (32, 34) can be drivingly connected to the input shaft (26) or the intermediate shaft (28);

a third transmission stage (38), via which the intermediate shaft (28) is drivingly connected to the output element (30).

12. The drive train (10) according to one of the previous claims:

a drive power increase during the gear change is temporarily increased to a maximum above a rated power of the respective drive unit (12) or can be increased; or

a drive power increase during the gear change is temporarily increased or can be increased at most only up to a rated power of the respective drive unit (12).

13. A motor vehicle, preferably a utility vehicle, comprising the drive train (10) according to one of the previous claims.

**Revendications**

1. Chaîne cinématique (10) pour un véhicule automobile, de préférence un véhicule utilitaire, possédant : une boîte de vitesses (14B), de préférence une boîte de vitesses à deux rapports, pour un véhicule automobile, possédant :

une première boîte de vitesses partielle (14A1) qui possède deux rapports de démultiplication (32, 34) et une unité de changement de rapport (36) destinée à commuter entre les deux rapports de démultiplication (32, 34) ;

une deuxième boîte de vitesses partielle (14A2) qui possède deux rapports de démultiplication (32, 34) et une unité de changement de rapport (36) destinée à changer entre les deux rapports de démultiplication (32, 34) ;

un élément de sortie (30) qui est relié de manière motrice à une sortie d'entraînement de la première boîte de vitesses partielle (14A1) et à une sortie d'entraînement de la deuxième boîte de vitesses partielle (14A2) ; et

une unité de commande (48), qui est configurée pour commander un changement de rapport de la boîte de vitesses (14B), le changement de rapport s'effectuant par une commutation décalée dans le temps, de préférence séquentielle, de l'unité de changement de rapport (36) de la première boîte de vitesses partielle (14A1) et de l'unité de changement de rapport (36) de la deuxième boîte de vitesses partielle (14A2) ;

une première unité d'entraînement (12), de préférence électrique, reliée de manière motrice à la première boîte de vitesses partielle (14A1) ; et

une deuxième unité d'entraînement (12), de préférence électrique, reliée de manière motrice à la deuxième boîte de vitesses partielle (14A2) ;

**caractérisé en ce que** l'unité de commande (48) est configurée de telle sorte que :

pendant la commutation de l'unité de changement de rapport (36) de l'une des boîtes de vitesses partielles (14A1, 14A2), une réduction de la puissance d'entraînement de l'unité d'entraînement (12) qui est reliée à la boîte de vitesses partielle (14A1) dont l'unité de changement de rapport (36) est en train de commuter est au moins partiellement compensée, de préférence pour les deux unités d'entraînement (12) l'une après l'autre, par une augmentation de la puissance d'entraînement de l'unité d'entraînement (12) qui est reliée de manière motrice à la boîte de vitesses partielle (14A2) dont l'unité de commutation (36) n'est pas en train de commuter ; et/ou

avant la commutation des unités de changement de rapport (36) des boîtes de vitesses partielles (14A1, 14A2), une réduction de la puissance d'entraînement de l'unité d'entraînement (12) qui est reliée la boîte de vitesses partielle (14A1) dont l'unité de changement de rapport (36) commute en premier est effectuée, et une augmentation, de préférence synchrone et/ou simultanée, de la puissance d'entraînement de l'unité d'entraînement (12) qui est reliée la boîte de vitesses partielle (14A2) dont l'unité de commutation (36) commute avec un retard, est effectuée ; et/ou

entre la commutation des unités de changement de rapport (36) des boîtes de vitesses partielles (14A1, 14A2), une réduction de la puissance d'entraînement de l'unité d'entraînement (12) qui est reliée la boîte de vitesses partielle (14A2) dont l'unité de changement de rapport (36) commute avec un retard est effectuée, et une augmentation, de préférence synchrone et/ou simultanée, de la puissance d'entraînement de l'unité d'entraînement (12) qui est reliée la boîte de vitesses partielle (14A1) dont l'unité de commutation (36) vient de commuter, est effectuée ; et/ou

après la commutation des unités de changement de rapport (36) des boîtes de vitesses partielles (14A1, 14A2), une réduction de la puissance d'entraînement de l'unité d'entraînement (12) qui est reliée la boîte de vitesses partielle (14A1) dont l'unité de changement de rapport (36) commute en premier est effectuée, et une augmentation, de préférence synchrone et/ou simultanée, de la puissance d'entraînement de l'unité d'entraînement (12) qui est reliée la boîte de vitesses partielle (14A2) dont l'unité de commutation (36) commute avec un retard, est effectuée.

2. Chaîne cinématique (10) selon la revendication 1, l'unité de commande (48) étant configurée de telle sorte que :
   commute d'abord l'unité de changement de rapport (36) de la première boîte de vitesses partielle (14A1), puis commute l'unité de changement de rapport (36) de la deuxième boîte de vitesses partielle (14A2), de préférence après avoir terminé la commutation de l'unité de changement de rapport (36) de la première boîte de vitesses partielle (14A1) et/ou de préférence après l'écoulement d'un laps de temps jusqu'à ce que l'unité de changement de rapport (36) de la deuxième boîte de vitesses partielle (14A2) soit pratiquement exempte de charge.

3. Chaîne cinématique (10) selon la revendication 1 ou la revendication 2, l'unité de commande (48) étant configurée de telle sorte que :
   la première boîte de vitesses partielle (14A1) et la deuxième boîte de vitesses partielle (14A2), pendant le changement de rapport, transmettent l'une après l'autre une puissance d'entraînement par la boîte de vitesses (14B), l'unité de changement de rapport (36) de l'une des boîtes de vitesses partielles (14A1, 14A2) commutant à chaque fois et l'autre des boîtes de vitesses partielles (14A1, 14A2) transmettant la puissance d'entraînement.

4. Chaîne cinématique (10) selon l'une des revendications précédentes,

   les deux rapports de démultiplication (32, 34) de la première boîte de vitesses partielle (14A1) présentant les mêmes démultiplications que les deux rapports de démultiplication (32, 34) de la deuxième boîte de vitesses partielle (14A2) ; et/ou
   les deux rapports de démultiplication (32, 34) de la première boîte de vitesses partielle (14A1) et les deux rapports de démultiplication (32, 34) de la deuxième boîte de vitesses partielle (14A2) étant configurés comme des composants identiques.

5. Chaîne cinématique (10) selon l'une des revendications précédentes,

   la première boîte de vitesses partielle (14A1) et la deuxième boîte de vitesses partielle (14A2) possédant le même nombre de rapports ; et/ou

la première boîte de vitesses partielle (14A1) et la deuxième boîte de vitesses partielle (14A2) étant respectivement réalisées sous la forme de boîtes de vitesses à deux rapports ; et/ou
la première boîte de vitesses partielle (14A1) et la deuxième boîte de vitesses partielle (14A2) étant de construction sensiblement identique.

6. Chaîne cinématique (10) selon l'une des revendications précédentes,
   l'unité de commande (36) de la première boîte de vitesses partielle (14A1) et l'unité de commande (36) de la deuxième boîte de vitesses partielle (14A2) pouvant être commutées indépendamment l'une de l'autre.

7. Chaîne cinématique (10) selon l'une des revendications précédentes,

   la boîte de vitesses (14B) étant réalisée sous la forme d'une transmission totalisatrice constituée de la première boîte de vitesses partielle (14A1) et de la deuxième boîte de vitesses partielle (14A2) ; et/ou
   la première boîte de vitesses partielle (14A1) et la deuxième boîte de vitesses partielle (14A2) étant commutées en parallèle.

8. Chaîne cinématique (10) selon l'une des revendications précédentes,

   la boîte de vitesses (14B) pouvant changer de rapport en charge ; et/ou
   la première boîte de vitesses partielle (14A1) et la deuxième boîte de vitesses partielle (14A2) ne pouvant respectivement pas changer de rapport en charge.

9. Chaîne cinématique (10) selon l'une des revendications précédentes,

   l'unité de changement de rapport (36) de la première boîte de vitesses partielle (14A1) et/ou l'unité de changement de rapport (36) de la deuxième boîte de vitesses partielle (14A2) étant réalisée pour un changement de rapport seulement sensiblement sans charge ; et/ou
   l'unité de changement de rapport (36) de la première boîte de vitesses partielle (14A1) et/ou l'unité de changement de rapport (36) de la deuxième boîte de vitesses partielle (14A2) étant réalisée sous la forme d'une unité de changement par complémentarité de formes, de préférence sous la forme d'un accouplement à griffes.

10. Chaîne cinématique (10) selon l'une des revendications précédentes,

les deux rapports de démultiplication (32, 34) de la première boîte de vitesses partielle (14A1) et/ou les deux rapports de démultiplication (32, 34) de la deuxième boîte de vitesses partielle (14A2) étant réalisés sous la forme de rapports à pignon, de préférence de rapports à pignon droit.

11. Chaîne cinématique (10) selon l'une des revendications précédentes, la première boîte de vitesses partielle (14A1) et la deuxième boîte de vitesses partielle (14A1) possédant respectivement :

   un arbre d'entrée (26) ;
   un arbre intermédiaire (28) ;
   les deux rapports de démultiplication (32, 34) par le biais desquels l'arbre d'entrée (26) peut être relié de manière motrice à l'arbre intermédiaire (28) ;
   l'unité de changement de rapport (36), par le biais de laquelle l'un ou l'autre des deux rapports de démultiplication (32, 34) peut sélectivement être relié de manière motrice à l'arbre d'entrée (26) ou à l'arbre intermédiaire (28) ;
   un troisième rapport de démultiplication (38), par le biais duquel l'arbre intermédiaire (28) est relié de manière motrice à l'élément de sortie (30).

12. Chaîne cinématique (10) selon l'une des revendications précédentes :

   une augmentation de la puissance d'entraînement pendant le changement de rapport est augmentée ou peut être augmentée temporairement au maximum jusqu'à au-dessus d'une puissance nominale de l'unité d'entraînement (12) respective ; ou
   une augmentation de la puissance d'entraînement pendant le changement de rapport est augmentée ou peut être augmentée temporairement au maximum seulement jusqu'à une puissance nominale de l'unité d'entraînement (12) respective.

13. Véhicule automobile, de préférence véhicule utilitaire, possédant une chaîne cinématique (10) selon l'une des revendications précédentes.

FIG. 1

FIG. 2

FIG. 3

FIG. 4

FIG. 5

FIG. 6

FIG. 7

FIG. 8

FIG. 9

# FIG. 10

<u>10</u>

12        12

72        14
16

# FIG. 11

72        14

30

# FIG. 12

32   26        34   42

12        14A1

40        46        38
36        50

28        72
14D   54        74
44        30

28        78
76

36        52
54        50

40        38

12        46

42        14A2

32   26        34

FIG. 13

FIG. 14

FIG. 15

FIG. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19932118 C1
- DE 102013204227 A1
- DE 102016002592 A
- WO 2018145231 A1
- EP 3388274 A1
- DE 10316862 A1